# EUROPÄISCHE PATENTSCHRIFT

(11) **EP 4 105 520 B1**
(45) Veröffentlichungstag und Bekanntmachung des Hinweises auf die Patenterteilung: **13.08.2025**
(21) Anmeldenummer: 22174972.4
(22) Anmeldetag: 24.05.2022
(51) Int. Cl.: F16H 37/04, F16H 3/64

(54) **GETRIEBE UND LANDWIRTSCHAFTLICHES ODER INDUSTRIELLES NUTZFAHRZEUG**
TRANSMISSION AND AGRICULTURAL OR INDUSTRIAL UTILITY VEHICLE
TRANSMISSION ET VÉHICULE UTILITAIRE AGRICOLE OU INDUSTRIEL

(30) Priorität: 16.06.2021 DE 102021115610; 16.06.2021 DE 102021115606; 16.06.2021 DE 102021115607; 16.06.2021 DE 102021115608; 16.06.2021 DE 102021115609
(43) Veröffentlichungstag der Anmeldung: 21.12.2022
(73) Patentinhaber: Deere & Company, Moline, IL 61265 (US)
(72) Erfinder: SHINDE, PRADIP, 68163 Mannheim (DE); LUBBEN, JEFFREY L, 68163 Mannheim (DE)
(74) Vertreter: Stein, Stefan

(56) Entgegenhaltungen:
- CN-A- 109 578 535
- DE-A1- 102008 041 205
- US-A1- 2019 085 959

## Beschreibung

Die Erfindung betrifft ein Getriebe gemäss dem Oberbegriff des unabhängigen Anspruchs 1 und ein landwirtschaftliches oder industrielles Nutzfahrzeug gemäss dem Anspruch 9.

In landwirtschaftlichen oder industriellen Nutzfahrzeugen, bevorzugt landwirtschaftlichen oder industriellen Zugfahrzeugen, besonders bevorzugt Traktoren oder Schleppern, kommen heute eine Vielzahl unterschiedlicher Getriebe, z. B. stufenlose Getriebe (IVT), teillastschaltbare Getriebe (PPST) oder volllastschaltbare Getriebe (PST) zum Einsatz. Die Getriebe ermöglichen den Vortrieb des Nutzfahrzeugs auch unter hoher Zuglast, beispielsweise verursacht durch ein daran angebautes Arbeitsgerät wie ein Bodenbearbeitungsgerät (z.B. Pflug) oder dergleichen, über eine bloße Veränderung der Antriebsmotordrehzahl hinaus unterbrechungsfrei verändern zu können. Dabei ist im Allgemeinen das Getriebe eines Nutzfahrzeugs in eine höhere Antriebsstrangarchitektur des gesamten Nutzfahrzeugs eingebettet. Eine übliche Antriebsstrangarchitektur sieht einen Antriebsmotor oder Motor und ein Getriebe vor. Diese können entlang einer Fahrzeuglängsachse, also einer Längsachse des Nutzfahrzeugs, die eine in eine Längsrichtung des Nutzfahrzeugs verlaufenden Achse ist, oder entlang einer Vorwärtsfahrrichtung des Fahrzeugs, insbesondere in einer vorderen Hälfte des Nutzfahrzeugs, angeordnet sein. Das Nutzfahrzeug, insbesondere der Antriebsmotor, kann eine Kurbelwelle umfassen, die insbesondere in der Nähe oder entlang einer Fahrzeugmittelebene, insbesondere einer vertikalen Fahrzeugmittelebene angeordnet sein kann. Mit dem Getriebe kann eine Kraft und/oder ein Drehmoment vom Antriebsmotor an die Bodeneingriffsmitteln, beispielsweise Räder und/oder Ketten und/oder Raupen, des Nutzfahrzeugs übertragen werden (Antrieb, Traktion). Das Getriebe, insbesondere eine Hauptgetriebeeinheit, kann entlang der Fahrzeuglängsachse und/oder entlang der Fahrzeugmittelebene und/oder entgegen der Vorwärtsfahrrichtung hinter dem Antriebsmotor in Richtung des hinteren Endes des Fahrzeugs angeordnet sein, insbesondere kann die Hauptgetriebeeinheit direkt am Antriebsmotor angeordnet sein. Das Antriebselement, insbesondere die Eingangswelle, des Getriebes, insbesondere der Hauptgetriebeeinheit, kann mit der Kurbelwelle des Antriebsmotors verbunden und/oder antreibbar sein. Die Kurbelwellenachsen der Kurbelwelle des Antriebsmotors und das Antriebselement des Getriebes können koaxial zueinander ausgerichtet und/oder angeordnet sein. Alternativ können die Kurbelwellenachse und das Antriebselement zueinander parallel verschoben oder in einem Winkel zueinander angeordnet sein. Das erste Abtriebselement des Getriebes kann zum Antrieb der Bodeneingriffsmittel mit diesen direkt oder indirekt verbindbar oder verbunden sein. Dadurch kann ein Kraft- und/oder Drehmomentfluss vom Antriebsmotor über die Kurbelwelle und das Antriebselement zum Abtriebselement und weiter an eine vordere und/oder hintere Antriebsachse und somit an die Bodeneingriffsmittel herstellbar sein. Die CN 109578535 A offenbart ein Zweiunddreissig (32) Gang Getriebe.

Nachteilig hierbei ist, dass bei diesen Nutzfahrzeugen mit der bekannten Antriebsstrangarchitektur das Getriebe zu viel Bauraum benötigt. Ein wesentlicher Nachteil sind hierbei die vielen Wellen und Zahnradsätze, die bekannte lastschaltbare Getriebe aufweisen. Dadurch beansprucht das Getriebe Bauraum, der beispielsweise für zusätzliche Bauteile und/oder eine Kabine des Nutzfahrzeugs genutzt werden könnte. Darüber hinaus weisen die bekannten Getriebe im Arbeitsbereich eine zu geringe Anzahl an Gängen und/oder einen zu kleinen Geschwindigkeitsbereich und/oder eine zu geringe Spreizung der Gänge auf. Im Speziellen fehlt eine ausreichende und optimale Anzahl an Übersetzungsverhältnissen im Arbeitsbereich der Geschwindigkeiten auf dem Feld. Die bekannten Getriebe mit vielen Schaltelementen, insbesondere Kupplungen und/oder Bremsen und/oder Schaltmuffen bzw. Synchronisatoren, sind ausserdem technisch und/oder konstruktiv aufwändig und verursachen hohe Herstellungskosten.

Der vorliegenden Erfindung liegt daher die Aufgabe zugrunde, ein Getriebe und ein Nutzfahrzeug vorzuschlagen, durch welche die vorgenannten Probleme überwunden werden. Insbesondere sollen ein Getriebe und ein Nutzfahrzeug vorgeschlagen werden, mit welchen eine Getriebevielfalt in einem Nutzfahrzeug erhöht wird und/oder welche technisch und/oder konstruktiv und/oder wirtschaftlich weniger aufwändig sind und/oder das Getriebe eine kompaktere Bauweise aufweist und/oder der Bauraum, bevorzugt im Nutzfahrzeug, besondere bevorzugt unterhalb einer Kabine und/oder zwischen Antriebsmotor und Hinterachsmodul, besser nutzbar ist und/oder die Leistung und/oder die Fahrtüchtigkeit des Getriebes und/oder Nutzfahrzeugs verbessert ist und/oder eine ausreichende Anzahl an Übersetzungsverhältnissen aufweist.

Diese Aufgabe wird durch ein Getriebe mit den Merkmalen des Anspruchs 1 und ein landwirtschaftliches oder industrielles Nutzfahrzeug mit den Merkmalen des Anspruchs 9 gelöst. Die abhängigen Ansprüche beziehen sich auf besonders vorteilhafte Ausführungsformen der Erfindung.

Die Erfindung ist im beigefügten Anspruchssatz beschrieben. Erfindungsgemäß wird ein Getriebe zum Übertragen eines von einem Antriebsmotor erzeugten Drehmoments auf mindestens eine vordere und/oder hintere Antriebsachse eines landwirtschaftlichen oder industriellen Nutzfahrzeugs vorgeschlagen. Das Getriebe umfasst ein Antriebselement, insbesondere die Eingangswelle, und ein erstes Abtriebselement, insbesondere eine erste Ausgangswelle, und eine Hauptgetriebeeinheit. Die Hauptgetriebeeinheit umfasst mindestens einen ersten Planetenradsatz mit einem ersten Sonnenrad, einem ersten Hohlrad, einem ersten Planetenträger, insbesondere einem ersten Steg, und einem ersten Planetensatz, und einen zweiten Planetenradsatz mit einem zweiten Sonnenrad, und einen dritten Planetenradsatz mit einem dritten Sonnenrad und einem dritten Planentensatz und einen vierten Planetenradsatz mit einem vierten Sonnenrad, einem vierten Hohlrad, einem vierten Planetenträger und einem vierten Planetensatz umfasst. Der zweite und dritte Planetenradsatz weisen einen ersten gemeinsamen Planetensatz und ein erstes gemeinsames Hohlrad und einen ersten gemeinsamen Planetenträger, bevorzugt einen ersten gemeinsamen Steg auf. Ausserdem umfasst die Hauptgetriebeeinheit genau acht Schaltelemente. Die Schaltelemente der Hauptgetriebeeinheit sind eine erste Bremse und eine zweite Bremse und eine erste Kupplung und eine zweite Kupplung und eine dritte Kupplung und eine vierte Kupplung und eine fünfte Kupplung und eine sechste Kupplung. Das Getriebe umfasst weiter ein Zwischengetriebe, das genau zwei Schaltelemente aufweist. Das Zwischengetriebe kann mindestens einen Planetenradsatz umfassen. Mit dem Zwischengetriebe können mindestens zwei Vorwärtsgänge herstellbar sein. Das Getriebe umfasst weiter eine Reversiereinheit, wobei die Reversiereinheit mindestens zwei, insbesondere genau zwei, Schaltelemente umfasst. Die Reversiereinheit ist bevorzugt zur Änderung einer Drehrichtung des Getriebes, besonders bevorzugt zur Änderung einer Drehrichtung des ersten Abtriebselements, und insbesondere eines zweiten Abtriebselements ausgestaltet. Darüber hinaus können mit der Reversiereinheit insbesondere mindestens, insbesondere genau, ein Vorwärtsgang und ein Rückwärtsgang herstellbar sein. Die Reversiereinheit kann mindestens einen Planetenradsatz oder mindestens zwei Radsätze mit je einem Los- und Festrad umfassen. Genau drei Schaltelemente der Hauptgetriebeeinheit und genau ein Schaltelement des Zwischengetriebes und genau ein Schaltelement der Reversiereinheit sind in Kombinationen von genau fünf Schaltelementen betätigbar, bevorzugt selektiv betätigbar, besonders bevorzugt schliessbar und lösbar und/oder einrückbar und/oder schaltbar und/oder selektiv eingreifbar, um mindestens achtundzwanzig, insbesondere genau achtundzwanzig, Vorwärtsgänge zwischen dem Antriebselement und dem ersten Abtriebselement und/oder dem zweiten Abtriebselement herzustellen. Darüber hinaus können zusätzlich mindestens achtundzwanzig, bevorzugt genau achtundzwanzig, Rückwärtsgänge herstellbar sein. Es kann aber auch nur ein Teil der achtundzwanzig Rückwärtsgänge, also weniger als achtundzwanzig Rückwärtsgänge, tatsächlich verwendet werden. Die Reversiereinheit ist in Richtung des Kraft- und Drehmomentflusses nach der Hauptgetriebeeinheit angeordnet. Die Hauptgetriebeeinheit umfasst ein erstes Verbindungselement, wobei das erste Verbindungselement mit dem Antriebselement und der vierten und fünften und sechsten Kupplung verbunden ist, und der vierte Planetenträger mit der vierten Kupplung mit dem Antriebselement und dem ersten Verbindungselement lösbar verbindbar ist, und das Antriebselement und das Verbindungselement mit der fünften Kupplung mit dem vierten Hohlrad lösbar verbindbar sind, und das Antriebselement und das erste Verbindungselement mit der sechsten Kupplung mit dem ersten Planetenträger lösbar verbindbar sind, und der vierte Planetenträger mit der ersten Kupplung mit dem zweiten Sonnenrad und/oder der zweiten Kupplung mit dem dritten Sonnenrad lösbar verbindbar ist.

Das erste gemeinsame Hohlrad kann mit der Reversiereinheit oder dem Zwischengetriebe, insbesondere ständig, verbunden sein, bevorzugt drehfest und/oder antreibbar verbunden sein. Die Hauptgetriebeeinheit kann aber auch ein erstes Zwischenelement, beispielsweise eine erste Zwischenwelle umfassen. Im Speziellen kann das erste Zwischenelement mit dem ersten gemeinsamen Hohlrad und der Reversiereinheit oder dem Zwischengetriebe, insbesondere ständig, verbunden sein, bevorzugt drehfest und/oder antreibbar verbunden sein.

Ebenso kann die Hauptgetriebeeinheit zumindest teilweise oder aber vollständig das Antriebselement und/oder das erste Abtriebselement umfassen. Mit der Hauptgetriebeeinheit können mindestens vierzehn Vorwärtsgänge zwischen dem Antriebselement und dem ersten gemeinsamen Hohlrad, bevorzugt zwischen dem Antriebselement und dem ersten Zwischenelement, herstellbar sein. Mit dem Zwischengetriebe können mindestens zwei Vorwärtsgänge herstellbar sein. Somit können mit der Hauptgetriebeeinheit und dem Zwischengetriebe insgesamt mindestens achtundzwanzig Vorwärtsgänge herstellbar sein. Mit der Reversiereinheit können ein Vorwärts- und ein Rückwärtsgang herstellbar sein. Somit können mit der Hauptgetriebeeinheit und dem Zwischengetriebe und der Reversiereinheit insgesamt mindestens achtundzwanzig Vorwärts- und achtundzwanzig Rückwärtsgänge herstellbar sein.

Die Planetenradsätze der Hauptgetriebeeinheit können axial betrachtet in der Reihenfolge erster Planetenradsatz, vierter Planetenradsatz, zweiter Planetenradsatz und dritter Planetenradsatz angeordnet sein. Der erste und vierte Planetenradsatz können als einfache Minus-Planetensätze ausgebildet sein. Ein Minus Planetensatz umfasst bekanntlich ein Sonnenrad, ein Hohlrad und ein Planetenträger, an dem Planetenräder drehbar gelagert, die jeweils mit Sonnenrad und Hohlrad kämmen. Hierdurch weist das Hohlrad bei festgehaltenem Planetenträger eine zum Sonnenrad entgegengesetzte Drehrichtung auf. Der erste Planetensatz kann insbesondere einen Satz von ersten Planetenrädern aufweisen. Der erste Planetensatz kann drei erste Planetenräder umfassen. Der erste Planetensatz, also die ersten Planetenräder, können am ersten Planetenträger drehbar gelagert sein. Der erste Planetensatz kann mit dem ersten Sonnenrad und dem ersten Hohlrad kämmen, sich also insbesondere in ständigem Kämmeingriff mit diesen befinden. Der vierte Planetensatz kann insbesondere einen Satz von vierten Planetenrädern aufweisen. Der vierte Planetensatz kann drei vierte Planetenräder umfassen. Der vierte Planetensatz, also die vierten Planetenräder, können am vierten Planetenträger drehbar gelagert sein.

Der vierte Planetensatz kann mit dem vierten Sonnenrad und dem vierte Hohlrad kämmen, sich also insbesondere in ständigem Kämmeingriff mit diesen befinden. Der dritte Planetensatz kann einen Satz von dritten Planetenrädern, insbesondere drei dritte Planetenräder, und/oder der erste gemeinsame Planetensatz einen Satz von ersten gemeinsamen Planetenrädern, insbesondere drei erste gemeinsame Planetenräder, umfassen. Der dritte Planetensatz, also die dritten Planetenräder, und der erste gemeinsame Planetensatz, also die ersten gemeinsamen Planetenräder, können am ersten gemeinsamen Planetenträger drehbar gelagert sein. Ausserdem kann der dritte Planetensatz mit dem dritten Sonnenrad und den ersten gemeinsamen Planetenrädern kämmen, sich also insbesondere in ständigem Kämmeingriff mit diesen befinden. Darüber hinaus kann der erste gemeinsame Planetensatz mit dem zweiten Sonnenrad und dem ersten gemeinsamen Hohlrad und dem dritten Planetensatz kämmen, sich also insbesondere in ständigem Kämmeingriff mit diesen befinden. Mit anderen Worten, der zweite und dritte Planetenradsatz können als ein doppelter Planetenradsatz, insbesondere als Ravigneaux und/oder Lepelletier Planetenradsatz, ausgebildet sein. Dabei kann der doppelte Planetenradsatz das zweite und dritte Sonnenrad, den dritten Planetensatz und den ersten gemeinsame Planetensatz, den ersten gemeinsamen Planetenträger und das erste gemeinsame Hohlrad umfassen. Üblicherweise werden für die Planetensätze des Getriebes, also insbesondere den ersten und dritten Planetensatz und/oder den ersten gemeinsamen und/oder einen zweiten gemeinsamen Planetensatz und/oder einen vierten und/oder fünften und/oder sechsten Planetensatz, jeweils drei Planetenräder verwendet. Es wäre aber auch eine andere Anzahl an Planetenrädern denkbar, beispielsweise jeweils vier oder fünf oder sechs oder mehrere Planetenräder. Die Anzahl der Planeten hat dabei vorteilhafterweise einen Einfluss auf das maximal übertragbare Drehmoment.

Mit anderen Worten, es wird ein Getriebe als Mehrstufengetriebe in Planetenbauweise vorgeschlagen, umfassend das Antriebselement, das mit einem Antriebsmotor verbunden, bevorzugt antreibbar und/oder drehfest verbunden sein kann. Des Weiteren kann das Getriebe mindestens sechs, insbesondere genau sechs, Planetenradsätze, mindestens zwei drehbare Wellen, das Antriebs- und das erste Abtriebselement sowie mindestens zwölf, insbesondere genau zwölf, Schaltelemente umfassen. Die Schaltelemente des Getriebes können als Reibschaltelemente und/oder Lamellenschaltelemente ausgeführt sein. Ebenso können die Schaltelemente als formschlüssige Schaltelemente ausgeführte Schaltelemente sein. Die Schaltelemente können Bremsen und/oder Kupplungen sein. Das Betätigen, insbesondere das selektive Betätigen oder Eingreifen, der mindestens fünf, insbesondere genau fünf, Schaltelemente des Getriebes kann verschiedene Übersetzungsverhältnisse zwischen dem Antriebselement und dem ersten Abtriebselement und/oder dem zweiten Abtriebselement bewirken, so dass vorzugsweise mindestens achtundzwanzig, insbesondere genau achtundzwanzig, Vorwärtsgänge und insbesondere genauso viele oder weniger Rückwärtsgänge herstellbar sind.

Das erste Abtriebselement kann zum Antrieb der hinteren und/oder vorderen Bodeneingriffsmittel des Nutzfahrzeugs vorgesehen sein und/oder mit einem Hinterachsmodul verbindbar sein. Dadurch kann ein Kraft- und/oder Drehmomentfluss zwischen dem ersten Abtriebselement und der hinteren und/oder vorderen Antriebsachse herstellbar sein, sodass beispielsweise eine Kraft und/oder ein Drehmoment an die hintere und/oder vordere Antriebsachse des Nutzfahrzeugs übertragen werden kann. Das Getriebe, insbesondere die Hauptgetriebeeinheit, kann aber auch das zweites Abtriebselement, insbesondere eine zweite Ausgangswelle umfassen. Das zweite Abtriebselement kann zum Antrieb der vorderen Bodeneingriffsmittel des Nutzfahrzeugs vorgesehen sein und/oder mit einem Vorderachsmodul antreibbar verbindbar oder verbunden sein. Dadurch kann ein Kraft- und/oder Drehmomentfluss zwischen dem zweiten Abtriebselement und der vorderen Antriebsachse herstellbar sein, sodass beispielsweise eine Kraft und/oder ein Drehmoment an die vordere Antriebsachse des Nutzfahrzeugs übertragen werden kann, und insbesondere kann gleichzeitig ein Kraft- und/oder Drehmomentfluss zwischen dem ersten Antriebselement und der hinteren Antriebsachse herstellbar sein. Das erste und zweite Abtriebselement können also antreibbar verbunden oder verbindbar sein. Vorteilhafterweise kann so ein Kraft- und/oder Drehmomentfluss, insbesondere ein getrennter Kraft- und/oder Drehmomentfluss, vom ersten Abtriebselement zur hinteren Antriebsachse und vom zweiten Abtriebselement zur vorderen Antriebsachse herstellbar sein.

Das Getriebe kann ein Hinterachsmodul aufweisen. Das Hinterachsmodul kann mindestens teilweise oder ganz die hintere Antriebsachse und/oder ein Hinterachsdifferential umfassen. Das Hinterachsmodul, insbesondere das Hinterachsdifferential, kann ein Hinterachsritzel, beispielsweise ein Antriebskegelrad oder ein Kegelritzel, und ein Hinterachszahnrad, beispielsweise ein Kegel- oder Ringzahnrad, umfassen. Das Hinterachsgehäuse kann das Hinterachsmodul, insbesondere das Hinterachsdifferential und/oder zumindest teilweise die hintere Antriebsachse aufnehmen. Das erste Abtriebselement kann mit dem Hinterachsritzel verbunden sein oder das Hinterachsritzel und das erste Abtriebselement können als ein einteiliges Bauteil ausgebildet sein. Das Getriebe kann ein Vorderachsmodul aufweisen. Das Vorderachsmodul kann teilweise oder ganz die vordere Antriebsachse und/oder ein Vorderachsdifferential umfassen. Das Vorderachsmodul, insbesondere das Vorderachsdifferential, kann ein Vorderachsritzel, beispielsweise ein Antriebskegelrad oder ein Kegelritzel, und ein Vorderachszahnrad, beispielsweise ein Kegel- oder Ringzahnrad, umfassen. Ein Vorderachsgehäuse kann das Vorderachsmodul, insbesondere das Vorderachsdifferential und/oder zumindest teilweise die vordere Antriebsachse aufnehmen. Das zweite Abtriebselement kann mit dem Vorderachsritzel verbunden sein oder das Vorderachsritzel und das zweite Abtriebselement können als ein einteiliges Bauteil ausgebildet sein.

Das Getriebe kann ein die Hauptgetriebeeinheit aufnehmendes Hauptgetriebegehäuse und/oder ein die Reversiereinheit aufnehmendes Reversiereinheitsgehäuse und/oder ein das Zwischengetriebe aufnehmendes Zwischengetriebegehäuse und/oder ein Hinterachsmodul aufnehmendes Hinterachsgehäuse und/oder ein Vorderachsmodul aufnehmendes Vorderachsgehäuse umfassen. Das Hauptgetriebegehäuse und/oder das Reversiereinheitsgehäuse und/oder das Zwischengetriebegehäuse und/oder das Hinterachsgehäuse und/oder das Vorderachsgehäuse können vorteilhafterweise, unabhängig von der Anzahl der Planetenradsätze und/oder Wellen, einen vorgebbaren und/oder festen Bauraum, also eine vorgebbare axiale und laterale Ausdehnung, aufweisen. Insbesondere in einem im Nutzfahrzeug verbauten Zustand weisen die Gehäuse dadurch im Nutzfahrzeug stets den gleichen Bauraum und/oder somit eine Modularität bzgl. des Bauraums auf. Das Hauptgetriebegehäuse und/oder das Reversiereinheitsgehäuse und/oder das Zwischengetriebegehäuse und/oder das Hinterachsgehäuse und/oder das Vorderachsgehäuse können ein- oder mehrteilig ausgebildet sein. Das Hauptgetriebegehäuse und/oder das Reversiereinheitsgehäuse und/oder das Zwischengetriebegehäuse und/oder das Hinterachsgehäuse und/oder das Vorderachsgehäuse können Bauteile des Getriebes in sich aufnehmen.

Das Getriebe kann ausserdem ein Koppelelement umfassen. Das Koppelelement kann am Antriebselement angeordnet sein. In einem im Nutzfahrzeug eingebauten Zustand können der Antriebsmotor, insbesondere die Kurbelwelle oder eine Antriebswelle des Antriebsmotors, und das Koppelelement oder das Antriebselement drehfest und/oder antreibbar verbindbar oder verbunden sein, beispielsweise über eine Welle-Nabe-Verbindung. Dadurch kann vorteilhafterweise zwischen der Hauptgetriebeeinheit und/oder der Reversiereinheit und/oder der Zwischengetriebe und/oder dem Hinterachsmodul und/oder dem Vorderachsmodul ein Drehmomentfluss herstellbar sein, insbesondere können das Antriebselement und somit das erste und/oder zweite Abtriebselement mit dem Antriebsmotor antreibbar sein.

In einem Zustand, in welchem das Getriebe in einem Nutzfahrzeug eingebaut ist, kann eine Getriebelängsachse, also eine Längsachse des Getriebes, die eine in eine Längsrichtung des Getriebes verlaufende Achse ist, parallel oder koaxial zu der Fahrzeuglängsachse angeordnet sein. Die Planetenradsätze können axial oder entlang der Getriebelängsachse angeordnet sein.

Wesentlich für die Erfindung ist, dass das Getriebe ausreichend Übersetzungen aufweist und/oder der Bauaufwand und die Baugröße, insbesondere der Bauraum, bzw. das Gewicht vorteilhafterweise optimiert sind und zudem der Wirkungsgrad hinsichtlich der Schlepp- und Verzahnungsverluste verbessert. In vorteilhafter Weise liegen geringe Drehmomente in den Schaltelementen und in den Planetenradsätzen des Getriebes vor, wodurch der Verschleiß des Getriebes in vorteilhafter Weise reduziert wird. Ebenso wird vorteilhafterweise durch die Ausgestaltung des Getriebes und/oder durch die geringen Momente eine konstruktiv einfache Ausgestaltung, insbesondere eine kompakte Bauweise, also ein geringes Volumen des Getriebes und/oder eine geringe Dimensionierung erreicht, sodass der vom Getriebe benötigte Bauraum und die entsprechenden Kosten reduziert werden. Darüber hinaus liegen auch geringe Drehzahlen bei den Wellen, den Schaltelementen und den Planetenradsätzen vor. Außerdem ist das Getriebe derart konzipiert, dass eine Anpassbarkeit an unterschiedliche Antriebstrangarchitekturen sowohl in Richtung des Kraft- und/oder Drehmomentflusses, als auch in räumlicher Hinsicht ermöglicht wird. Das Getriebe kann beispielsweise in Front-Quer Bauweise oder im Rahmen eines Standardantriebs in das Nutzfahrzeug eingebaut werden. Aufgrund der räumlichen Anordnung der drei Planetensätze kann in einem im Nutzfahrzeug eingebauten Zustand des Getriebes von Vorteil der Bauraum, insbesondere der Axial- und Radialraum, des Getriebes im Nutzfahrzeug minimiert werden. Darüber hinaus weist das Getriebe vorteilhafterweise eine geringen bzw. minimale Anzahl an Zahnrädern und Schaltelementen auf, wodurch das Getriebe, insbesondere auch in einem im Nutzfahrzeug eingebauten Zustand, vorteilhafterweise eine kompaktere und konstruktiv einfachere Bauweise aufweist und der Bauaufwand erheblich reduziert ist. In vorteilhafter Weise ergibt sich bei dem Getriebe ein guter Wirkungsgrad in den Vorwärts- und/oder Rückwärtsgängen bezüglich der Schlepp- und Verzahnungsverluste. In vorteilhafterweise Weise sind also das Getriebe und das Nutzfahrzeug insgesamt technisch und konstruktiv und wirtschaftlich weniger aufwändig. Ebenso wird zusätzlicher Bauraum für Bauteile außerhalb des Getriebes ermöglicht. Darüber hinaus kann die Kabine tiefer, also in Richtung einer Aufstandsfläche des Nutzfahrzeugs verschoben angeordnet sein, als Kabinen in bekannten Nutzfahrzeugen. Durch die erfindungsgemäße Ausgestaltung des Getriebes ergeben sich für Nutzfahrzeuge geeignete Übersetzungen sowie eine erhöhte Gesamtspreizung des Mehrstufengetriebes, wodurch eine Verbesserung des Fahrkomforts und eine signifikante Verbrauchsabsenkung bewirkt werden. Dadurch kann also vorteilhafterweise die Leistung und/oder die Fahrtüchtigkeit und/oder Strassenlage des Nutzfahrzeugs verbessert werden.

In Ausgestaltung der Erfindung ist das Zwischengetriebe in Richtung des Kraft- und Drehmomentflusses nach der Hauptgetriebeeinheit angeordnet. Das Zwischengetriebe kann in Richtung des Kraft- und Drehmomentflusses nach der Hauptgetriebeeinheit und vor der Reversiereinheit angeordnet sein oder die Reversiereinheit kann in Richtung des Kraft- und Drehmomentflusses nach der Hauptgetriebeeinheit und vor dem Zwischengetriebe angeordnet sein. Die Hauptgetriebeeinheit und/oder das Zwischengetriebe und/oder die Reversiereinheit können entlang der Getriebelängsachse und/oder der Fahrzeuglängsachse angeordnet sein. Ebenso kann das Zwischengetriebe auch vor der Hauptgetriebeeinheit angeordnet sein. Vorteilhafterweise wird dadurch eine kompakte axiale Bauweise erreicht.

Das Antriebselement kann mit der vierten und fünften und sechsten Kupplung verbunden oder verbindbar sein, bevorzugt drehfest und/oder antreibbar verbunden oder verbindbar sein. Die Hauptgetriebeeinheit umfasst ein erstes Verbindungselement, insbesondere eine erste Verbindungswelle. Das erste Verbindungselement ist mit dem Antriebselement und der vierten und fünften und sechsten Kupplung verbunden, bevorzugt drehfest und/oder antreibbar verbunden. Die fünfte Kupplung kann mit dem vierten Hohlrad verbunden oder verbindbar sein, bevorzugt drehfest und/oder antreibbar verbunden oder verbindbar sein. Das Getriebe, insbesondere die Hauptgetriebeeinheit, kann ein zweites Verbindungselement, insbesondere eine zweite Verbindungswelle umfassen. Das zweite Verbindungselement kann mit der fünften Kupplung und dem vierten Hohlrad verbunden oder verbindbar sein, bevorzugt drehfest und/oder antreibbar verbunden oder verbindbar sein. Das Antriebselement und das erste Verbindungselement ist mit der fünften oder über die fünfte Kupplung mit dem vierten Hohlrad und/oder insbesondere dem zweiten Verbindungselement lösbar verbindbar oder verbunden, insbesondere lösbar drehfest und/oder antreibbar verbindbar oder verbunden. Die fünfte Kupplung kann also ausgebildet sein, das Antriebselement und das erste Verbindungselement mit dem vierten Hohlrad und/oder insbesondere dem zweiten Verbindungselement zu koppeln. Die sechste Kupplung kann mit dem ersten Planetenträger verbunden oder verbindbar sein, bevorzugt drehfest und/oder antreibbar verbunden oder verbindbar sein. Das Getriebe, insbesondere die Hauptgetriebeeinheit, kann ein drittes Verbindungselement, insbesondere eine dritte Verbindungswelle umfassen. Das dritte Verbindungselement kann mit der sechsten Kupplung und dem ersten Planetenträger verbunden oder verbindbar sein, bevorzugt drehfest und/oder antreibbar verbunden oder verbindbar sein. Das Antriebselement und idas erste Verbindungselement ist mit der sechsten oder über die sechste Kupplung mit dem ersten Planetenträger und/oder insbesondere dem dritten Verbindungselement lösbar verbindbar oder verbunden, insbesondere lösbar drehfest und/oder antreibbar verbindbar oder verbunden. Die sechste Kupplung kann also ausgebildet sein, das Antriebselement, und insbesondere das erste Verbindungselement, mit dem ersten Planetenträger und/oder insbesondere dem dritten Verbindungselement zu koppeln. Das erste Hohlrad kann mit dem vierten Planetenträger verbunden sein, bevorzugt drehfest und/oder antreibbar verbunden sein. Das Getriebe, insbesondere die Hauptgetriebeeinheit, kann ein viertes Verbindungselement, insbesondere eine vierte Verbindungswelle umfassen. Das vierte Verbindungselement kann mit dem ersten Hohlrad und dem vierten Planetenträger verbunden sein, bevorzugt drehfest und/oder antreibbar verbunden sein. Der vierte Planetenträger kann mit der ersten und/oder zweiten und/oder vierten Kupplung verbunden oder verbindbar sein, bevorzugt drehfest und/oder antreibbar verbunden oder verbindbar sein. Ebenso kann das Getriebe, insbesondere die Hauptgetriebeeinheit, ein fünftes Verbindungselement, insbesondere eine fünfte Verbindungswelle umfassen. Das fünfte Verbindungselement kann mit dem vierten Planetenträger und/oder der ersten und/oder zweiten und/oder vierten Kupplung verbunden oder verbindbar sein, bevorzugt drehfest und/oder antreibbar verbunden oder verbindbar sein. Der vierte Planetenträger, und insbesondere das fünfte Verbindungselement, kann mit der vierten oder über die vierte Kupplung mit dem Antriebselement und dem ersten Verbindungselement lösbar verbindbar oder verbunden sein, insbesondere lösbar drehfest und/oder antreibbar verbindbar oder verbunden sein. Die vierte Kupplung kann also ausgebildet sein, den vierten Planetenträger, und insbesondere das fünfte Verbindungselement, mit dem Antriebselement und dem ersten Verbindungselement zu koppeln. Darüber hinaus kann das zweite Sonnenrad mit der ersten Bremse und/oder der ersten Kupplung verbunden oder verbindbar sein, insbesondere drehfest und/oder antreibbar verbunden oder verbindbar sein. Das Getriebe, insbesondere die Hauptgetriebeeinheit, kann ein sechstes Verbindungselement, insbesondere eine sechste Verbindungswelle umfassen. Das sechste Verbindungselement kann mit dem zweiten Sonnenrad und/oder der ersten Bremse und/oder der ersten Kupplung verbunden oder verbindbar sein, bevorzugt drehfest und/oder antreibbar verbunden oder verbindbar sein. Der vierte Planetenträger und insbesondere das fünfte Verbindungselement und/oder die erste und/oder zweite und/oder vierte Kupplung ist mit der ersten oder über die erste Kupplung mit dem zweiten Sonnenrad und/oder der ersten Bremse und/oder insbesondere dem sechsten Verbindungselement lösbar verbindbar oder verbunden, insbesondere lösbar drehfest und/oder antreibbar verbindbar oder verbunden. Die erste Kupplung kann also ausgebildet sein, die erste und/oder zweite und/oder vierte Kupplung, und insbesondere das fünfte Verbindungselement, mit dem zweiten Sonnenrad und/oder der ersten Bremse und/oder insbesondere dem sechsten Verbindungselement zu koppeln. Das zweite Sonnenrad, und insbesondere das sechste Verbindungselement, kann mit der ersten Bremse gegen Drehung haltbar sein, bevorzugt lösbar gegen Drehung haltbar sein. Das zweite Sonnenrad, und insbesondere das sechste Verbindungselement, kann mit der ersten Bremse an ein Hauptgetriebegehäuse koppelbar und/oder mit dem Hauptgetriebegehäuse lösbar verbindbar sein, bevorzugt lösbar gegen Drehung haltbar sein. Die erste Bremse kann also ausgebildet sein, das zweite Sonnenrad, und insbesondere das sechste Verbindungselement, gegen Drehung zu halten. Ebenso kann das dritte Sonnenrad mit der zweiten Kupplung verbunden oder verbindbar sein, insbesondere drehfest und/oder antreibbar verbunden oder verbindbar sein. Das Getriebe, insbesondere die Hauptgetriebeeinheit, kann ein siebtes Verbindungselement, insbesondere eine siebte Verbindungswelle umfassen. Das siebte Verbindungselement kann mit dem dritten Sonnenrad und/oder der zweiten Kupplung verbunden oder verbindbar sein, bevorzugt drehfest und/oder antreibbar verbunden oder verbindbar sein. Die erste und/oder zweite und/oder vierte Kupplung, und insbesondere das fünfte Verbindungselement, können mit der zweiten oder über die zweite Kupplung mit dem dritten Sonnenrad und/oder insbesondere dem siebten Verbindungselement lösbar verbindbar oder verbunden sein, insbesondere lösbar drehfest und/oder antreibbar verbindbar oder verbunden sein. Die zweite Kupplung kann also ausgebildet sein, die erste und/oder zweite und/oder vierte Kupplung, und insbesondere das fünfte Verbindungselement, mit dem dritten Sonnenrad und/oder insbesondere dem siebten Verbindungselement zu koppeln. Ebenso kann der erste gemeinsame Planetenträger mit der zweiten Bremse verbunden oder verbindbar sein, insbesondere drehfest und/oder antreibbar verbunden oder verbindbar sein. Das Getriebe, insbesondere die Hauptgetriebeeinheit, kann ein achtes Verbindungselement, insbesondere eine achte Verbindungswelle umfassen. Das achte Verbindungselement kann mit der zweiten Bremse und/oder dem ersten gemeinsamen Planetenträger verbunden oder verbindbar sein, bevorzugt drehfest und/oder antreibbar verbunden oder verbindbar sein. Im Speziellen kann das erste Zwischenelement mit dem ersten gemeinsamen Hohlrad verbunden sein, bevorzugt drehfest und/oder antreibbar verbunden sein. Der erste gemeinsame Planetenträger und/oder der erste gemeinsame Planetensatz, und insbesondere das achte Verbindungselement, können mit der zweiten Bremse gegen Drehung haltbar, bevorzugt lösbar gegen Drehung haltbar. Der erste gemeinsame Planetenträger und/oder der erste gemeinsame Planetensatz und/oder der dritte Planetensatz, und insbesondere das achte Verbindungselement, können mit der zweiten Bremse an das Hauptgetriebegehäuse koppelbar und/oder mit dem Hauptgetriebegehäuse lösbar verbindbar sein, bevorzugt lösbar gegen Drehung haltbar sein. Die zweite Bremse kann also ausgebildet sein, den ersten gemeinsame Planetenträger und/oder den ersten gemeinsamen Planetensatz und/oder der dritte Planetensatz, und insbesondere das achte Verbindungselement, gegen Drehung zu halten. Das Antriebselement kann mit der dritten Kupplung verbunden sein, bevorzugt drehfest und/oder antreibbar verbunden sein. Das Getriebe, insbesondere die Hauptgetriebeeinheit, kann ein neuntes Verbindungselement, insbesondere eine neunte Verbindungswelle umfassen. Das neunte Verbindungselement kann mit dem Antriebselement und der dritten Kupplung verbunden sein, bevorzugt drehfest und/oder antreibbar verbunden sein. Die dritte Kupplung kann mit dem ersten gemeinsamen Planetenträger verbindbar sein, bevorzugt drehfest und/oder antreibbar verbindbar sein. Das Getriebe, insbesondere die Hauptgetriebeeinheit, kann ein zehntes Verbindungselement, insbesondere eine zehnte Verbindungswelle umfassen. Das zehnte Verbindungselement kann mit dem ersten gemeinsamen Planetenträger und der dritten Kupplung verbunden oder verbindbar sein, bevorzugt drehfest und/oder antreibbar verbunden oder verbindbar sein. Das Antriebselement, und insbesondere das neunte Verbindungselement, kann mit der dritten oder über die dritte Kupplung mit dem ersten gemeinsamen Planetenträger und/oder insbesondere dem zehnten Verbindungselement lösbar verbindbar oder verbunden sein, insbesondere lösbar drehfest und/oder antreibbar verbindbar oder verbunden sein. Die dritte Kupplung kann also ausgebildet sein, das Antriebselement, und insbesondere das neunte Verbindungselement, mit dem ersten gemeinsamen Planetenträger und/oder insbesondere dem zehnten Verbindungselement zu koppeln. Das erste und vierte Sonnenrad können gegen Drehung gehalten sein. Das erste und vierte Sonnenrad können an das Hauptgetriebegehäuse gekoppelt und/oder mit dem Hauptgetriebegehäuse verbindbar sein, bevorzugt gegen Drehung gehalten sein.

In Ausgestaltung der Erfindung umfasst die Reversiereinheit einen fünften Planetenradsatz mit einem fünften Sonnenrad, einem fünften Hohlrad, einem fünften Planetenträger und einem fünften Planetensatz. Die Schaltelemente der Reversiereinheit sind eine siebte Kupplung und eine dritte Bremse. Die Reversiereinheit kann parallel oder koaxial zum Antriebselement und/oder dem ersten Abtriebselement angeordnet sein. Der fünfte Planetensatz kann einen Satz von fünften Planetenrädern aufweisen, insbesondere drei fünfte Planetenräder. Die fünften Planetenräder können am fünften Planetenträger drehbar gelagert sein. Der fünfte Planetensatz, also insbesondere der Satz von fünften Planetenrädern, kann mit dem fünften Sonnenrad und dem fünften Hohlrad kämmen, sich also insbesondere in ständigem Kämmeingriff mit diesen befinden. Die Reversiereinheit kann mindestens zwei, insbesondere genau zwei, Schaltelemente umfassen, die betätigbar sind, bevorzugt selektiv betätigbar, besonders bevorzugt schliessbar und lösbar und/oder einrückbar und/oder schaltbar und/oder selektiv eingreifbar sind, um das erste gemeinsame Hohlrad, und insbesondere das erste Zwischenelement, mit dem fünften Sonnenrad zu verbinden oder um das fünften Hohlrad gegen Drehung zu halten. Das erste gemeinsame Hohlrad, und insbesondere das erste Zwischenelement, kann mit dem fünften Planetenträger und/oder der siebten Kupplung verbunden oder verbindbar sein, bevorzugt drehfest und/oder antreibbar verbunden oder verbindbar sein. Das fünfte Sonnenrad kann mit einem sechsten Sonnenrad und/oder der siebten Kupplung und/oder einer achten Kupplung verbunden oder verbindbar sein, bevorzugt drehfest und/oder antreibbar verbunden oder verbindbar sein. Das Getriebe, insbesondere die Reversiereinheit, kann ein elftes Verbindungselement, insbesondere eine elfte Verbindungswelle umfassen. Das elfte Verbindungselement kann mit dem fünften Sonnenrad und einem sechsten Sonnenrad und/oder der siebten Kupplung und/oder einer achten Kupplung verbunden oder verbindbar sein, bevorzugt drehfest und/oder antreibbar verbunden oder verbindbar sein. Der fünfte Planetenträger und das erste gemeinsame Hohlrad, und insbesondere das erste Zwischenelement, können mit der siebten oder über die siebte Kupplung mit dem fünften Sonnenrad und/oder insbesondere dem elften Verbindungselement und/oder dem sechsten Sonnenrad lösbar verbindbar sein, insbesondere lösbar drehfest und/oder antreibbar verbindbar sein. Die achte Kupplung kann also ausgebildet sein, den fünften Planetenträger und das erste gemeinsame Hohlrad, und insbesondere das erste Zwischenelement, mit dem fünften Sonnenrad und/oder insbesondere dem elften Verbindungselement und/oder dem sechsten Sonnenrad zu koppeln. Das fünfte Hohlrad kann mit der dritten Bremse gegen Drehung haltbar, bevorzugt lösbar gegen Drehung haltbar sein. Das fünfte Hohlrad kann mit der dritten Bremse an ein Gehäuse der Reversiereinheit, also einem Reversiereinheitsgehäuse, koppelbar und/oder mit diesem lösbar verbindbar sein, bevorzugt lösbar gegen Drehung haltbar sein. Die dritte Bremse kann also ausgebildet sein, das fünfte Hohlrad gegen Drehung zu halten. Aufgrund der Kombination der Hauptgetriebeeinheit mit der Reversiereinheit werden vorteilhafterweise, die oben genannten erfindungsgemässen Vorteile erreicht. Darüber hinaus weist die Reversiereinheit aufgrund der beschriebenen Planetenbauweise vorteilhafterweise eine geringe axiale Baulänge auf. Dies wirkt sich insbesondere auf die axiale Baulänge des Getriebes und/oder den Bauraum des Getriebes, insbesondere in einem Zustand, in welchem das Getriebe in das Nutzfahrzeug eingebaut ist, insgesamt vorteilhaft aus.

Als vorteilhafte Massnahme umfasst das Getriebe ein Zwischengetriebe. Das Zwischengetriebe weist einen sechsten Planetenradsatz mit einem sechsten Sonnenrad, einem sechsten Hohlrad, einem sechsten Planetenträger, insbesondere einem sechsten Steg, und einem sechsten Planetensatz auf. Das Zwischengetriebe kann mindestens zwei, insbesondere genau zwei, Schaltelemente umfassen. Die Schaltelemente des Zwischengetriebes sind eine achte und neunte Kupplung. Das Getriebe, insbesondere das Zwischengetriebe, kann ein zweites Zwischenelement teilweise oder auch vollständig umfassen. Der sechste Planetensatz kann einen Satz von sechsten Planetenrädern aufweisen, insbesondere drei sechste Planetenräder. Die sechsten Planetenräder können am sechsten Planetenträger drehbar gelagert sein. Der sechsten Planetensatz, also insbesondere der Satz von sechsten Planetenrädern, kann mit dem sechsten Sonnenrad und dem sechsten Hohlrad kämmen, sich also insbesondere in ständigem Kämmeingriff mit diesen befinden. Darüber hinaus kann das Zwischengetriebe parallel oder koaxial zum Antriebselement und/oder dem ersten Abtriebselement angeordnet sein. Im Speziellen kann das Zwischengetriebe das erste Abtriebselement zumindest teilweise oder vollständig umfassen. Die zwei Schaltelemente des Zwischengetriebes sind betätigbar, bevorzugt selektiv betätigbar, besonders bevorzugt schliessbar und lösbar und/oder einrückbar und/oder schaltbar und/oder selektiv eingreifbar sind, um das sechste Sonnenrad oder den sechsten Planetensatz und/oder den sechsten Planetenträger mit dem zweiten Zwischenelement und/oder insbesondere dem ersten Abtriebselement zu verbinden und/oder zu koppeln, insbesondere lösbar drehfest und/oder antreibbar zu verbinden. Das sechste Sonnenrad kann mit dem fünften Sonnenrad und/oder der siebten und achten Kupplung verbunden oder verbindbar sein, bevorzugt drehfest und/oder antreibbar verbunden oder verbindbar sein. Das elfte Verbindungselement kann dem vierten und fünften Sonnenrad und/oder der siebten Kupplung und/oder der achten Kupplung verbunden oder verbindbar sein, bevorzugt drehfest und/oder antreibbar verbunden oder verbindbar sein. Im Speziellen können die Reversiereinheit und/oder das Zwischengetriebe das elfte Verbindungselement umfassen. Das fünfte und sechste Sonnenrad, und insbesondere das elfte Verbindungselement, können mit der achte oder über die achte Kupplung mit dem zweiten Zwischenelement und/oder insbesondere dem ersten Abtriebselement lösbar verbindbar sein, insbesondere lösbar drehfest und/oder antreibbar verbindbar sein. Die achte Kupplung kann also ausgebildet sein, das fünfte und sechste Sonnenrad, und insbesondere das elfte Verbindungselement, mit dem zweiten Zwischenelement und/oder insbesondere dem ersten Abtriebselement zu koppeln. Ausserdem kann der sechste Planetenträger mit der neunten Kupplung verbunden oder verbindbar sein, insbesondere drehfest und/oder antreibbar verbunden oder verbindbar sein. Das Getriebe, insbesondere das Zwischengetriebe, kann ein zwölftes Verbindungselement, insbesondere eine zwölfte Verbindungswelle umfassen. Das zwölfte Verbindungselement kann mit der neunten Kupplung und/oder dem sechsten Planetenträger verbunden oder verbindbar sein, bevorzugt drehfest verbunden oder verbindbar sein. Der sechste Planetenträger und/oder der sechste Planetensatz, und insbesondere das zwölfte Verbindungselement, können mit der neunten oder über die neunte Kupplung mit dem zweiten Zwischenelement und/oder insbesondere dem ersten Abtriebselement lösbar verbindbar sein, insbesondere lösbar drehfest und/oder antreibbar verbindbar sein. Die neunte Kupplung kann also ausgebildet sein, den sechsten Planetenträger, und insbesondere das zwölfte Verbindungselement, mit dem zweiten Zwischenelement und/oder insbesondere dem ersten Abtriebselement zu koppeln. Das sechste Hohlrad kann gegen Drehung gehalten sein. Das sechste Hohlrad kann an ein Gehäuse des Zwischengetriebes, also einem Zwischengetriebegehäuse, gekoppelt und/oder mit diesem verbunden sein, bevorzugt gegen Drehung gehalten sein. Aufgrund der Kombination der Hauptgetriebeeinheit mit dem Zwischengetriebe werden vorteilhafterweise, die oben genannten erfindungsgemässen Vorteile erreicht. Darüber hinaus weist das Zwischengetriebe aufgrund der beschriebenen Planetenbauweise vorteilhafterweise eine geringe axiale Baulänge auf. Dies wirkt sich insbesondere auf die axiale Baulänge des Getriebes und/oder den Bauraum des Getriebes, insbesondere in einem Zustand, in welchem das Getriebe in das Nutzfahrzeug eingebaut ist, insgesamt vorteilhaft aus.

In einer vorteilhaften Weiterbildung des Getriebes umfasst das Getriebe ein Zapfwellenmodul. Das Hinterachsmodul, insbesondere das Hinterachsgehäuse, kann zwischen dem Zapfwellenmodul und der Hauptgetriebeeinheit angeordnet sein. Das Getriebe kann eine Zapfwellen-Antriebswelle umfassen. Das Zapfwellenmodul kann von der Zapfwellen-Antriebswelle antreibbar sein. Dabei kann die Getriebelängsachse koaxial oder parallel zur Zapfwellen-Antriebswelle sein. Die Zapfwellen-Antriebswelle kann insbesondere im Antriebselement angeordnet sein. Ein Zapfwellengehäuse kann die Bauteile des Zapfwellenmoduls aufnehmen. Die Bauteile des Zapfwellenmoduls können die Zapfwellen-Antriebswelle und/oder der Zapfenwellenstummel sowie das Zapfwellen-Getriebe sein. Die Zapfwellen-Antriebswelle kann als Vollwelle ausgeführt sein. Das Antriebselement kann als Hohlwelle ausgeführt sein. Das Antriebselement kann die Zapfwellen-Antriebswelle in sich aufnehmen. Die Zapfwellen-Antriebswelle kann in einem Zustand, bei welchem das Getriebe im Nutzfahrzeug eingebaut ist, vom Antriebsmotor antreibbar sein, insbesondere auch derart gekoppelt sein, dass die Zapfwellen-Antriebswelle mit dem Antriebsmotor antreibbar ist. Das Zapfwellenmodul, insbesondere das Zapfwellengetriebe, kann also durch die Zapfwellen-Antriebswelle, insbesondere auch durch das Hinterachsmodul, mit dem Antriebsmotor durch das Antriebselement antriebsverbunden oder antreibbar sein. Auf diese Weise ist vorteilhafterweise eine direkte und damit besonders energieeffiziente Antriebsleistungsübertragung vom Antriebsmotor zu einem Zapfwellenmodul, insbesondere Zapfwellenabtrieb des Nutzfahrzeugs möglich.

In einer vorteilhaften Ausführungsform ist das erste Abtriebselement mit dem zweiten Zwischenelement antreibbar verbunden oder verbindbar, und insbesondere das erste Abtriebselement mit dem zweiten Zwischenelement antreibbar. Bevorzugt können das zweite Zwischenelement und das erste Abtriebselement mit einem Zahnradsatz koppelbar sein. Dazu kann das erste Abtriebselement über den oder mit dem Zahnradsatz antreibbar sein. Der Zahnradsatz kann zwei permanent kämmende Abtriebsräder, ein erstes und ein zweites Abtriebsrad umfassen, die als Festräder ausgebildet sein können. Das erste Abtriebsrad kann drehfest mit dem zweiten Zwischenelement und das zweite Abtriebsrad drehfest mit dem ersten Abtriebselement verbunden sein. Das zweite Abtriebselement kann mit einer Abtriebskupplung verbunden oder verbindbar sein, insbesondere lösbar drehfest und/oder antreibbar verbunden oder verbindbar sein. Die Abtriebskupplung kann mit einem dritten Abtriebsrad drehfest verbunden sein. Das dritte Abtriebsrad kann permanent mit dem zweiten Abtriebsrad kämmen. Das zweite Abtriebselement kann mit dem ersten Abtriebselement antreibbar verbunden oder verbindbar sein, und insbesondere das zweite Abtriebselement mit dem ersten Abtriebselement antreibbar sein. Dadurch kann vorteilhafterweise eine modulare und/oder kompakte Bauweise des Getriebes erreicht werden, da die einzelnen Einheiten des Getriebes, also die Hauptgetriebeeinheit und/oder die Reversiereinheit und/oder das Zwischengetriebe, austauschbar sein können.

Insgesamt sind mit der Hauptgetriebeeinheit in jeder Ausgestaltung mindestens oder genau vierzehn Vorwärtsgänge herstellbar und mit dem Zwischengetriebe in jeder Ausgestaltung mindestens zwei, insbesondere genau zwei, Vorwärtsgänge herstellbar und mit der Reversiereinheit mindestens oder genau jeweils ein Vorwärts- und ein Rückwärtsgangs herstellbar.

Die Erfindung betrifft weiter ein landwirtschaftliches oder industrielles Nutzfahrzeug, insbesondere ein Traktor oder Schlepper oder eine Baumaschine. Das landwirtschaftliche oder industrielle Nutzfahrzeug umfasst ein Getriebe nach einem der Ansprüche 1 bis 8. Das Nutzfahrzeug kann ausserdem einen Antriebsmotor umfassen. Das Getriebe ist zum Übertragen eines von einem Antriebsmotor erzeugten Drehmoments auf mindestens eine vordere und/oder hintere Antriebsachse eines landwirtschaftlichen oder industriellen Nutzfahrzeugs ausgebildet. Das erfindungsgemässe Nutzfahrzeug weist die oben beschriebenen Vorteile des erfindungsgemässen Getriebes auf.

In Ausgestaltung der Erfindung ist das Getriebe derart im Nutzfahrzeug angeordnet, dass die Getriebelängsachse im Wesentlichen parallel oder koaxial, insbesondere parallel oder koaxial, zu einer Fahrzeuglängsachse ist. Dabei kann die Hauptgetriebeeinheit, und/oder insbesondere die Reversiereinheit und/oder das Zwischengetriebe, entlang der Getriebelängsachse ausgerichtet sein. Das Getriebe kann aber auch derart im Nutzfahrzeug angeordnet sein, dass eine Getriebemittelebene im Wesentlichen parallel oder kongruent zur Fahrzeugmittelebene ist, insbesondere dass die Getriebemittelebene parallel oder kongruent zur Fahrzeugmittelebene ist. Im Nutzfahrzeug mit Antriebsmotor und Getriebe kann mit dem Getriebe ein vom Antriebsmotor erzeugtes Drehmoment auf mindestens eine vordere und/oder hintere Antriebsachse des Nutzfahrzeugs übertragbar sein. Das landwirtschaftliche oder industrielle Nutzfahrzeug kann eine Kabine und ein Fahrgestell umfassen, wobei die Kabine am, insbesondere auf, dem Fahrgestell angeordnet sein kann. Die Achslage des Antriebselements des Getriebes kann durch die Position der Kurbelwelle des Antriebsmotors bestimmt sein. Das erste Abtriebselement kann längsorientiert und in derselben vertikalen Position wie die hintere Antriebsachse sein, deren Achse mit den Hinterrädern koaxial sein kann. Ebenso kann das zweite Abtriebselement, insbesondere eine zweite Ausgangswelle, längsorientiert und in derselben vertikalen Position wie die vordere Antriebsachse sein, deren Achse mit den vorderen Bodeneingriffsmitteln oder Rädern koaxial sein kann. Die vordere und hintere Antriebsachse kann mit dem ersten Abtriebselement antreibbar sein. Es können aber auch die hintere Antriebsachse mit dem ersten Abtriebselement und die vordere Antriebsachse mit dem zweiten Abtriebselement antreibbar sein. Das erfindungsgemässe Nutzfahrzeug weist vorteilhafterweise eine deutlich schlankere und/oder kompakter Bauweise auf und/oder das Getriebe kommt mit weniger Bauraum aus.

Mit dem erfindungsgemässen Getriebe und dem erfindungsgemässen Nutzfahrzeug, das das Getriebe umfasst, können vorteilhafterweise mindestens achtundzwanzig Vorwärtsgänge und insbesondere mindestens achtundzwanzig Rückwärtsgänge zwischen dem Antriebselement und dem ersten Abtriebselement und/oder zweiten Abtriebselement herstellbar und/oder realisierbar sein. Das erfindungsgemässe Getriebe und/oder das erfindungsgemässe Nutzfahrzeug weisen mindestens einen und/oder mehrere der folgenden Vorteile auf:
- Höhere Effizienz und weniger Verlustleistung des Getriebes
- Das Getriebe benötigt weniger Verpackungsvolumen, also einen kleineren Bauraum als bekannte vergleichbare Getriebe.
- Mehr Optionen für das Übersetzungsverhältnis des Getriebes aufgrund der Kombination mehrerer Planetenstufen
- Geringerer Geräuschpegel
- Weniger Kupplungen
- Kompakter Bauraum und insbesondere eine Verringerung des Volumens des Getriebes und/oder des benötigten Bauraums im Nutzfahrzeug
- Koaxiale Anordnung von Antriebs- und erstem und/oder zweitem Abtriebselement
- Das Getriebe weist ein geringeres Gewicht und geringere Herstellkosten als bekannte vergleichbare Getriebe auf
- Höhere Leistungsdichte und höhere Drehmomentkapazität
- Längere Lebensdauer des Getriebes aufgrund der Verwendung von Planetenradsätzen gegenüber bekannten vergleichbaren Getrieben
- Niedriges Trägheitsmoment

Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. In den schematischen Zeichnungen zeigen:
- Fig. 1: eine schematische Darstellung eines ersten Ausführungsbeispiels eines erfindungsgemässen landwirtschaftlichen oder industriellen Nutzfahrzeugs mit einem erfindungsgemässen Getriebe, und
- Fig. 2: eine schematische Darstellung eines ersten Ausführungsbeispiels des erfindungsgemässen Getriebes, und
- Fig. 3: eine schematische Darstellung eines Schaltschemas des ersten Ausführungsbeispiels des erfindungsgemässen Getriebes.

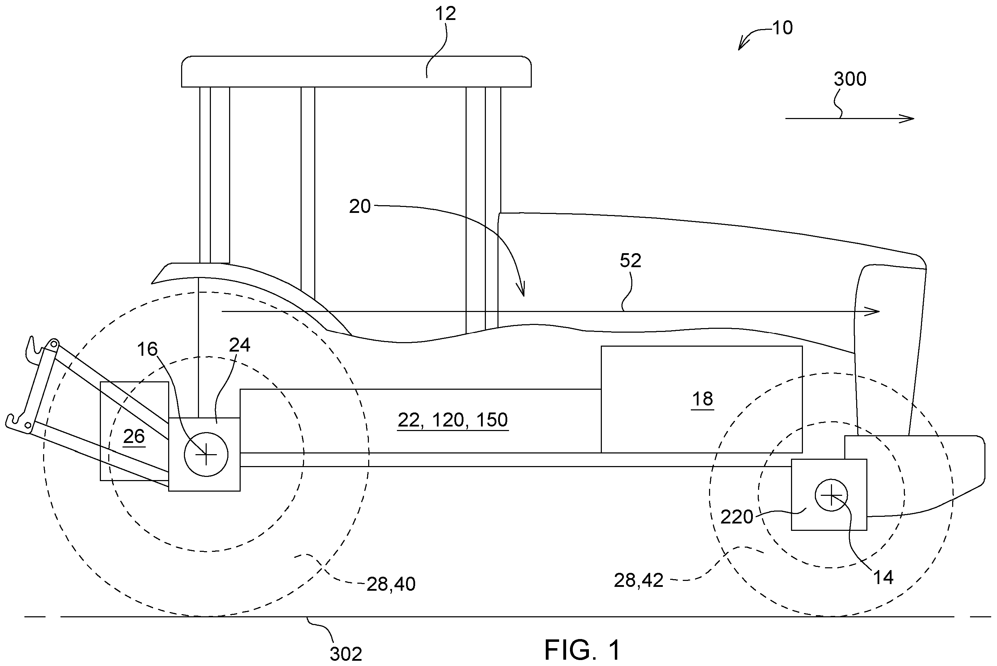

Figur 1 zeigt eine schematische Darstellung eines ersten Ausführungsbeispiels eines erfindungsgemässen landwirtschaftlichen oder industriellen Nutzfahrzeugs 10, insbesondere eines Traktors oder Schleppers, mit einem erfindungsgemässen Getriebe 20. Der grundsätzliche Aufbau eines Nutzfahrzeugs 10 wird als dem Fachmann bekannt angenommen. Das Nutzfahrzeug 10 umfasst eine Kabine 12, eine vordere Antriebsachse 14 und eine hintere Antriebsachse 16. Die hintere Antriebsachse 16 kann permanent und die vordere Antriebsachse 14 kann bedarfsweise zuschaltbar sein oder permanent angetrieben werden. Das Nutzfahrzeug 10 umfasst ferner einen Antriebsmotor 18, der als Verbrennungskraftmaschine ausgeführt sein kann. Das Getriebe 20 weist eine Antriebsstrangarchitektur auf, die, wie nachfolgend beschrieben, aus verschiedenen einzelnen Getriebemodulen zusammengesetzt sein kann. Die vorliegend beschriebene Antriebsstrangarchitektur kann im Kraft- und Drehmomentfluss, ausgehend vom Antriebsmotor 18, ein erfindungsgemässes Getriebe 20 mit einer Hauptgetriebeeinheit 22 und insbesondere einem Hinterachsmodul 24 und einem Zapfwellenmodul 26 aufweisen.

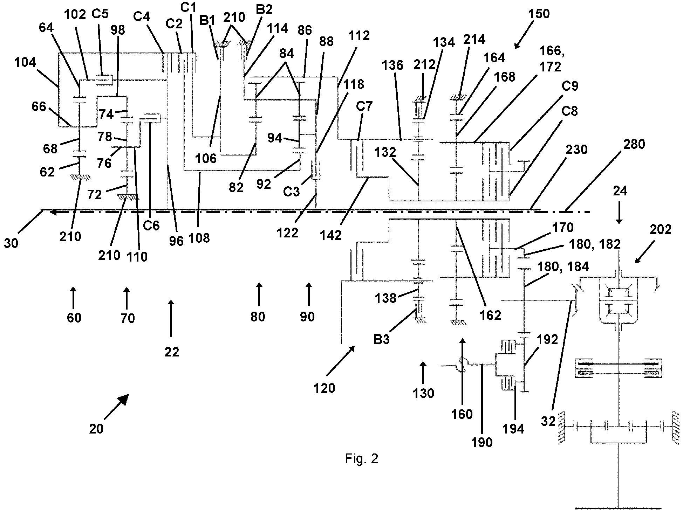

Dabei ist das Getriebe 20, insbesondere die Hauptgetriebeeinheit 22, dem Antriebsmotor 18 entgegen der Vorwärtsfahrrichtung 300 des Nutzfahrzeugs 10 nachgelagert und/oder entlang einer Fahrzeuglängsachse 52, also einer Längsachse des Nutzfahrzeugs 10, angeordnet. Das Getriebe 20, insbesondere die Hauptgetriebeeinheit 22, ist mit dem Antriebsmotor 18 antriebsverbunden und/oder kann mit dem Antriebsmotor 18 antreibbar sein. Das Hinterachsmodul 24 kann dem Getriebe 20, insbesondere der Hauptgetriebeeinheit 22 oder einer Reversiereinheit 120 oder einem Zwischengetriebe 150, nachgelagert sein. Dabei kann das Hinterachsmodul 24 mit der Hauptgetriebeeinheit 22 oder der Reversiereinheit 120 oder dem Zwischengetriebe 150 antriebsverbunden und/oder antreibbar sein. Mit dem gezeigten Getriebe 20 kann ein Kraft- und Drehmoment des Antriebsmotors 18 mit unterschiedlichen Gangstufen auf ein erstes Abtriebselement (siehe Figuren 2, Bezugszeichen 32) und/oder ein zweites Abtriebselement (siehe Figur 2, Bezugszeichen 190) übertragen werden.

Das erste Abtriebselement 32 und/oder das zweite Abtriebselement 190 können wiederum in Antriebsverbindung mit der hinteren und/oder vorderen Antriebsachse 14, 16 stehen. Ebenso kann aber auch das erste Abtriebselement in Antriebsverbindung mit der hinteren Antriebsachse 16 und das zweite Abtriebselement 190 in Antriebsverbindung mit der vorderen Antriebsachse 14 stehen. Es können also die vordere und/oder hintere Antriebsachse 14, 16 mit dem ersten Abtriebselement 32 antreibbar sein, insbesondere kann ein Kraft- und Drehmoment vom ersten Abtriebselement 32 auf die vordere und/oder hintere Antriebsachse 14, 16 übertragen werden. Es kann aber auch die hintere Antriebsachse 16 mit dem ersten Abtriebselement 32 und/oder die vorderen Antriebsachse 14 mit dem zweiten Abtriebselement 190 antreibbar sein, insbesondere kann ein Kraft- und Drehmoment vom ersten Abtriebselement 32 auf die hintere Antriebsachse 16 übertragen werden und/oder ein Kraft- und Drehmoment vom zweiten Abtriebselement 190 auf die vordere Antriebsachse 14 übertragen werden. Die vordere und/oder hintere Antriebsachse 14, 16 wandeln eine Drehung des ersten und/oder zweiten Abtriebselements 32, 190 in eine Drehung eines oder mehrerer Bodeneingriffsmittel 28 und somit in einen Vorschub des Nutzfahrzeugs um. Das Nutzfahrzeug kann daher abhängig von einer im Getriebe 20 gewählten Gangstufe mit unterschiedlicher Drehzahl angetrieben werden. Folglich ist ein mit dem Getriebe 20 ausgestattetes Nutzfahrzeug 10 abhängig von der im Getriebe 20 gewählten Gangstufe in unterschiedlichen Geschwindigkeitsbereichen bewegbar.

Das Zugfahrzeug 10 kann eines oder mehrere Bodeneingriffsmittel 28, hier in Form von Rädern 40, 42 dargestellt, aufweisen, welche mit einem Untergrund 302 zur Obertragung von Antriebskräften in Eingriff stehen und/oder durch die sich das Zugfahrzeug 10 auf dem Untergrund abstützt. Das Zugfahrzeug 10 kann ausserdem ein Fahrgestell (nicht dargestellt) aufweisen, wobei das Fahrgestell insbesondere von den an der vorderen und hinteren Antriebsachse 14, 16 aufgehängten Rädern 28 getragen werden kann.

Figur 2 zeigt eine schematische Darstellung eines ersten Ausführungsbeispiels des erfindungsgemässen Getriebes 20. Das in Figur 2 gezeigte Getriebe 20 entspricht im Wesentlichen dem in Figur 1 gezeigten Getriebe, weshalb im Folgenden lediglich auf in Figur 1 nicht gezeigte Details eingegangen wird. Das Nutzfahrzeug 10 gemäss Figur 1 kann das Getriebe 20, wie in Figur 2 dargestellt, umfassen. Das Getriebe 20 zum Übertragen eines von einem Antriebsmotor 18 erzeugten Drehmoments auf mindestens eine vordere und/oder hintere Antriebsachse 14, 16 des landwirtschaftlichen oder industriellen Nutzfahrzeugs 10 umfasst ein Antriebselement 30 und das erste Abtriebselement 32 und eine Hauptgetriebeeinheit 22. Die Hauptgetriebeeinheit 22 umfasst einen ersten und zweiten und dritten und vierten Planetenradsatz 70, 80, 90, 60. Der erste Planetenradsatz 70 weist ein erstes Sonnenrad 72, ein erstes Hohlrad 74, einen ersten Planetenträger 76 und einen ersten Planetensatz 78 auf. Der vierte Planetenradsatz 60 weist ein viertes Sonnenrad 62 und ein viertes Hohlrad 64 und einen vierten Planetenträger 66 und einen vierten Planetensatz 68 auf. Der zweite Planetenradsatz 80 weist ein zweites Sonnenrad 82 auf. Der dritte Planetenradsatz 90 weist ein drittes Sonnenrad 92 und einen dritten Planentensatz 94 auf. Darüber hinaus weisen der zweite und dritte Planetenradsatz 80, 90 einen ersten gemeinsamen Planetensatz 84 und ein erstes gemeinsames Hohlrad 86 und einen ersten gemeinsamen Planetenträger 88 auf. Die Hauptgetriebeeinheit 22 umfasst mindestens acht Schaltelement C1, C2, C3, C4, C5, C6, B1, B2. Das Getriebe 20 umfasst weiter ein Zwischengetriebe 150 mit mindestens zwei Schaltelementen C8, C9 und eine Reversiereinheit 120 mit mindestens zwei Schaltelementen B3, C7. Mindestens drei Schaltelemente C1, C2, C3, C4, C5, C6, B1, B2 der Hauptgetriebeeinheit 22 und mindestens ein Schaltelement C8, C9 des Zwischengetriebes 150 und mindestens ein Schaltelement B3, C7 der Reversiereinheit 120 in Kombinationen von mindestens vier Schaltelementen C1, C2, C3, C4, C5, C6, C7, C8 ,C9, B1, B2, B3 betätigbar sind, um mindestens 28 (achtundzwanzig) Vorwärtsgänge zwischen dem Antriebselement 30 und dem ersten Abtriebselement 32 herzustellen. Die Schaltelement der Hauptgetriebeeinheit 22 sind eine erste Bremse B1 und eine zweite Bremse B2 und eine erste Kupplung C1 und eine zweite Kupplung C2 und eine dritte Kupplung C3 und eine vierte Kupplung C4 und eine fünfte Kupplung C5 und eine sechste Kupplung C6. Das Antriebselement 30 ist mit der vierten und fünften und sechsten Kupplung C4, C5, C6 verbunden oder verbindbar sein, bevorzugt drehfest und/oder antreibbar verbunden oder verbindbar sein. Das Getriebe 20, insbesondere die Hauptgetriebeeinheit 22, kann ein erstes Verbindungselement 96, insbesondere eine erste Verbindungswelle umfassen. Das erste Verbindungselement 96 kann mit dem Antriebselement 30 und der vierten und fünften und sechsten Kupplung C4, C5, C6 verbunden oder verbindbar sein, bevorzugt drehfest und/oder antreibbar verbunden oder verbindbar sein. Die fünfte Kupplung C5 ist mit dem vierten Hohlrad 64 verbunden oder verbindbar sein, bevorzugt drehfest und/oder antreibbar verbunden oder verbindbar sein. Das Getriebe 20, insbesondere die Hauptgetriebeeinheit 22, kann ein zweites Verbindungselement 102, insbesondere eine zweite Verbindungswelle umfassen. Das zweite Verbindungselement 102 kann mit der fünften Kupplung C5 und dem vierten Hohlrad 64 verbunden oder verbindbar sein, bevorzugt drehfest und/oder antreibbar verbunden oder verbindbar sein. Das Antriebselement 30, und insbesondere das erste Verbindungselement 96, ist mit der fünften oder über die fünfte Kupplung C5 mit dem vierten Hohlrad 64 und/oder insbesondere dem zweiten Verbindungselement 102 lösbar verbindbar oder verbunden, insbesondere lösbar drehfest und/oder antreibbar verbindbar oder verbunden. Die sechste Kupplung C6 ist mit dem ersten Planetenträger 76 verbunden oder verbindbar, bevorzugt drehfest und/oder antreibbar verbunden oder verbindbar. Das Getriebe 20, insbesondere die Hauptgetriebeeinheit 22, kann ein drittes Verbindungselement 110, insbesondere eine dritte Verbindungswelle umfassen. Das dritte Verbindungselement 110 kann mit der sechsten Kupplung C6 und dem ersten Planetenträger 76 verbunden oder verbindbar sein, bevorzugt drehfest und/oder antreibbar verbunden oder verbindbar sein. Das Antriebselement 30, und insbesondere das erste Verbindungselement 96, ist mit der sechsten oder über die sechste Kupplung C6 mit dem ersten Planetenträger 76 und/oder insbesondere dem dritten Verbindungselement 110 lösbar verbindbar oder verbunden, insbesondere lösbar drehfest und/oder antreibbar verbindbar oder verbunden. Das erste Hohlrad 74 ist mit dem vierten Planetenträger 66 verbunden, bevorzugt drehfest und/oder antreibbar verbunden. Das Getriebe 20, insbesondere die Hauptgetriebeeinheit 22, kann ein viertes Verbindungselement 98, insbesondere eine vierte Verbindungswelle umfassen. Das vierte Verbindungselement 98 kann mit dem ersten Hohlrad 74 und dem vierten Planetenträger 66 verbunden sein, bevorzugt drehfest und/oder antreibbar verbunden sein. Der vierte Planetenträger 66 ist mit der ersten und/oder zweiten und/oder vierten Kupplung C1, C2, C4 verbunden oder verbindbar, bevorzugt drehfest und/oder antreibbar verbunden oder verbindbar. Ebenso kann das Getriebe 20, insbesondere die Hauptgetriebeeinheit 22, ein fünftes Verbindungselement 104, insbesondere eine fünfte Verbindungswelle umfassen. Das fünfte Verbindungselement 104 kann mit dem vierten Planetenträger 66 und/oder der ersten und/oder zweiten und/oder vierten Kupplung C1, C2, C4 verbunden oder verbindbar sein, bevorzugt drehfest und/oder antreibbar verbunden oder verbindbar sein. Der vierte Planetenträger 66, und insbesondere das fünfte Verbindungselement 104, ist mit der vierten oder über die vierte Kupplung C4 mit dem Antriebselement 30, und insbesondere dem ersten Verbindungselement 96, lösbar verbindbar oder verbunden, insbesondere lösbar drehfest und/oder antreibbar verbindbar oder verbunden. Darüber hinaus ist das zweite Sonnenrad 82 mit der ersten Bremse B1 und/oder der ersten Kupplung C1 verbunden oder verbindbar, insbesondere drehfest und/oder antreibbar verbunden oder verbindbar. Das Getriebe 20, insbesondere die Hauptgetriebeeinheit 22, kann ein sechstes Verbindungselement 106, insbesondere eine sechste Verbindungswelle umfassen. Das sechste Verbindungselement 106 kann mit dem zweiten Sonnenrad 82 und/oder der ersten Bremse B1 und/oder der ersten Kupplung C1 verbunden oder verbindbar sein, bevorzugt drehfest und/oder antreibbar verbunden oder verbindbar sein. Die erste und/oder zweite und/oder vierte und/oder siebte Kupplung C1, C2, C3, und insbesondere das fünfte Verbindungselement 104, ist mit der ersten oder über die erste Kupplung C1 mit dem zweiten Sonnenrad 82 und/oder der ersten Bremse B1 und/oder insbesondere dem sechsten Verbindungselement 106 lösbar verbindbar oder verbunden, insbesondere lösbar drehfest und/oder antreibbar verbindbar oder verbunden. Das zweite Sonnenrad 82, und insbesondere das sechste Verbindungselement 106, ist mit der ersten Bremse B1 gegen Drehung haltbar, bevorzugt lösbar gegen Drehung haltbar. Das zweite Sonnenrad 82, und insbesondere das sechste Verbindungselement 106, kann mit der ersten Bremse B1 an ein Hauptgetriebegehäuse 210 koppelbar und/oder mit dem Hauptgetriebegehäuse 210 lösbar verbindbar sein, bevorzugt lösbar gegen Drehung haltbar sein. Ebenso ist das dritte Sonnenrad 92 mit der zweiten Kupplung C2 verbunden oder verbindbar, insbesondere drehfest und/oder antreibbar verbunden oder verbindbar. Das Getriebe 20, insbesondere die Hauptgetriebeeinheit 22, kann ein siebtes Verbindungselement 108, insbesondere eine siebte Verbindungswelle umfassen. Das siebte Verbindungselement 108 kann mit dem dritten Sonnenrad 92 und/oder der zweiten Kupplung C2 verbunden oder verbindbar sein, bevorzugt drehfest und/oder antreibbar verbunden oder verbindbar sein. Die erste und/oder zweite und/oder vierte C1, C2, C4, und insbesondere das fünfte Verbindungselement 104, ist mit der zweiten oder über die zweite Kupplung C2 mit dem dritten Sonnenrad 92 und/oder insbesondere dem siebten Verbindungselement 108 lösbar verbindbar oder verbunden, insbesondere lösbar drehfest und/oder antreibbar verbindbar oder verbunden. Das erste und vierte Sonnenrad 72, 62 sind gegen Drehung gehalten sein. Das erste und vierte Sonnenrad 72, 62 können an das Hauptgetriebegehäuse 210 gekoppelt und/oder mit dem Hauptgetriebegehäuse 210 verbindbar sein, bevorzugt gegen Drehung gehalten sein. Ebenso sind der erste gemeinsame Planetenträger 88 und der erste gemeinsame Planetensatz 84 mit der zweiten Bremse B2 verbunden oder verbindbar, insbesondere drehfest und/oder antreibbar verbunden oder verbindbar. Das Getriebe 20, insbesondere die Hauptgetriebeeinheit 22, kann ein achtes Verbindungselement 114, insbesondere eine achte Verbindungswelle umfassen. Das achte Verbindungselement 114 kann mit der zweiten Bremse B2 und/oder dem ersten gemeinsamen Planetenträger 88 verbunden oder verbindbar sein, bevorzugt drehfest und/oder antreibbar verbunden oder verbindbar sein. Im Speziellen kann das Getriebe 20, insbesondere die Hauptgetriebeeinheit 22 ein erstes Zwischenelement 112 umfassen. Das erste Zwischenelement 112 kann mit dem ersten gemeinsamen Hohlrad 86 verbunden sein, bevorzugt drehfest und/oder antreibbar verbunden sein. Der erste gemeinsame Planetenträger 88 und/oder der erste gemeinsame Planetensatz 84, und insbesondere das achte Verbindungselement 114, sind mit der zweiten Bremse B2 gegen Drehung haltbar, bevorzugt lösbar gegen Drehung haltbar. Der erste gemeinsame Planetenträger 88 und/oder der erste gemeinsame Planetensatz 84, und insbesondere das achte Verbindungselement 114, können mit der zweiten Bremse B2 an das Hauptgetriebegehäuse 210 koppelbar und/oder mit dem Hauptgetriebegehäuse 210 lösbar verbindbar sein, bevorzugt lösbar gegen Drehung haltbar sein. Das Antriebselement 30 ist mit der dritten Kupplung C3 verbunden, bevorzugt drehfest und/oder antreibbar verbunden. Das Getriebe 20, insbesondere die Hauptgetriebeeinheit 22, kann ein neuntes Verbindungselement 122, insbesondere eine neunte Verbindungswelle umfassen. Das neunte Verbindungselement 122 kann mit dem Antriebselement 30 und der dritten Kupplung C3 verbunden sein, bevorzugt drehfest und/oder antreibbar verbunden sein. Die dritte Kupplung C3 ist mit dem ersten gemeinsamen Planetenträger 88 verbindbar, bevorzugt drehfest und/oder antreibbar verbindbar. Das Getriebe 20, insbesondere die Hauptgetriebeeinheit 22, kann ein zehntes Verbindungselement 118, insbesondere eine zehnte Verbindungswelle umfassen. Das zehnte Verbindungselement 118 kann mit dem ersten gemeinsamen Planetenträger 88 und der dritten Kupplung verbunden oder verbindbar sein, bevorzugt drehfest und/oder antreibbar verbunden oder verbindbar sein. Das Antriebselement 30, und insbesondere das neunte Verbindungselement 122, ist mit der dritten oder über die dritte Kupplung C3 mit dem ersten gemeinsamen Planetenträger 88 und/oder insbesondere dem zehnten Verbindungselement 118 lösbar verbindbar oder verbunden, insbesondere lösbar drehfest und/oder antreibbar verbindbar oder verbunden. Dadurch kann vorteilhafterweise eine optimale kompakte Packungsdichte des Getriebes 20, insbesondere der Hauptgetriebeeinheit 22, erreicht werden, insbesondere auch eine kompakte räumliche Anordnung des Getriebes 20 im Nutzfahrzeug in einem im Nutzfahrzeug 10 verbauten Zustand.

Das Getriebe 20 umfasst weiter eine Reversiereinheit 120. Die Reversiereinheit 120 umfasst einen fünften Planetenradsatz 130 mit einem fünften Sonnenrad 132, einem fünften Hohlrad 134, einem fünften Planetenträger 136 und einem fünften Planetensatz 138. Die Reversiereinheit 120 umfasst zwei Schaltelemente B3, C7, die betätigbar sind, bevorzugt selektiv betätigbar sind, besonders bevorzugt schliessbar und lösbar und/oder einrückbar und/oder schaltbar und/oder selektiv eingreifbar sind, sodass das erste gemeinsame Hohlrad 86, und insbesondere das erste Zwischenelement 112, mit dem vierten Sonnenrad 132 verbindbar ist oder das vierte Hohlrad 134 gegen Drehung haltbar ist. Die Schaltelemente der Reversiereinheit 120 sind eine siebte Kupplung C7 und eine dritte Bremse B3. Das erste gemeinsame Hohlrad 86, und insbesondere das erste Zwischenelement 112, ist mit dem fünften Planetenträger 136 und der siebten Kupplung C7 verbunden oder verbindbar, bevorzugt drehfest und/oder antreibbar verbunden oder verbindbar. Das fünfte Sonnenrad 132 kann mit einem sechsten Sonnenrad 162 und/oder der siebten Kupplung C7 und/oder einer achten Kupplung C8 verbunden oder verbindbar sein, bevorzugt drehfest und/oder antreibbar verbunden oder verbindbar sein. Die Reversiereinheit 120 kann ein elftes Verbindungselement 142, insbesondere eine elfte Verbindungswelle umfassen. Das elfte Verbindungselement 142 kann mit dem fünften Sonnenrad 132 und einem sechsten Sonnenrad 162 und/oder der siebten Kupplung C7 und/oder der achten Kupplung C8 verbunden oder verbindbar sein, bevorzugt drehfest und/oder antreibbar verbunden oder verbindbar sein. Der fünfte Planetenträger 136 und das erste gemeinsame Hohlrad 86, und insbesondere das erste Zwischenelement 112, sind mit der siebten oder über die siebte Kupplung C7 mit dem fünften Sonnenrad 132 und/oder insbesondere dem elften Verbindungselement 142 lösbar verbindbar, insbesondere lösbar drehfest verbindbar. Das fünfte Hohlrad 134 ist mit der dritten Bremse B3 lösbar gegen Drehung haltbar. Das fünfte Hohlrad 134 kann mit der dritten Bremse B3 an das Reversiereinheitsgehäuse 212 koppelbar und/oder mit diesem lösbar verbindbar sein.

Im Weiteren umfasst das Getriebe 20 ein Zwischengetriebe 150. Das Zwischengetriebe 150 weist einen sechsten Planetenradsatz 160 mit einem sechsten Sonnenrad 162, einem sechsten Hohlrad 164, einem sechsten Planetenträger 166 und einem sechsten Planetensatz 168 auf. Die zwei Schaltelemente C8, C9 des Zwischengetriebes 150 sind die achte Kupplung C8 und eine neunte Kupplung C9. Die Schaltelemente C8, C9 Zwischengetriebes 150 sind betätigbar, bevorzugt selektiv betätigbar sind, besonders bevorzugt schliessbar und lösbar und/oder einrückbar und/oder schaltbar und/oder selektiv eingreifbar sind, um das sechste Sonnenrad 162 oder den sechsten Planetenträger 166 und/oder den sechsten Planetensatz 168 mit einem zweiten Zwischenelement 170 und/oder dem ersten Abtriebselement 32 zu verbinden. Das sechste Sonnenrad 162 ist mit dem fünften Sonnenrad 132 und/oder der siebten Kupplung C7 und/oder der achten Kupplung C8 verbunden oder verbindbar, bevorzugt drehfest und/oder antreibbar verbunden oder verbindbar. Das elfte Verbindungselement 142 ist mit dem fünften und sechsten Sonnenrad 132, 162 und/oder der siebten Kupplung C7 und/oder der achten Kupplung C8 verbunden oder verbindbar, bevorzugt drehfest und/oder antreibbar verbunden oder verbindbar. Ausserdem ist der sechste Planetenträger 166 mit der neunten Kupplung C9 verbunden oder verbindbar, insbesondere drehfest und/oder antreibbar verbunden oder verbindbar. Das Getriebe 20, insbesondere das Zwischengetriebe 150, kann ein zwölftes Verbindungselement 172, insbesondere eine zwölfte Verbindungswelle umfassen. Das zwölfte Verbindungselement 172 kann mit der neunten Kupplung C9 und/oder dem sechsten Planetenträger 166 verbunden oder verbindbar sein, bevorzugt drehfest und/oder antreibbar verbunden oder verbindbar sein. Das sechsten Sonnenrad 162 und das fünfte Sonnenrad 132, und insbesondere das elfte Verbindungselement 142, sind mit der achten oder über die achte Kupplung C8 mit dem zweiten Zwischenelement 170 und/oder insbesondere dem ersten Abtriebselement 32 lösbar verbindbar, insbesondere lösbar drehfest und/oder antreibbar verbindbar. Der sechste Planetenträger 166, und insbesondere das zwölfte Verbindungselement 172, ist mit der neunten oder über die neunte Kupplung C19 mit dem zweiten Zwischenelement 170 und/oder insbesondere dem ersten Abtriebselement 32 lösbar verbindbar, insbesondere lösbar drehfest verbindbar. Das sechste Hohlrad 164 ist gegen Drehung gehalten. Das sechste Hohlrad 164 kann an das Zwischengetriebegehäuse 214 gekoppelt und/oder mit dem Zwischengetriebegehäuse 214 gegen Drehung gehalten sein. Das erste Abtriebselement 32 ist mit dem zweiten Zwischenelement 170 verbunden und/oder koppelbar und/oder antreibbar. Dazu können das zweite Zwischenelement 170 und das erste Abtriebselement 32 mit einem Zahnradsatz 180 gekoppelt und/oder das erste Abtriebselement 32 mit dem zweiten Zwischenelement 170 antreibbar sein. Der Zahnradsatz 180 umfasst zwei permanent kämmende Abtriebsräder 182, 18, insbesondere ein erstes und ein zweites Abtriebsrad 182, 184, die als Festräder ausgebildet sind. Das erste Abtriebsrad 182 ist drehfest mit dem zweiten Zwischenelement 170 und das zweite Abtriebsrad 184 drehfest mit dem ersten Abtriebselement 32 verbunden. Das zweite Abtriebselement 190 ist mit einer Abtriebskupplung 194 verbunden oder verbindbar, insbesondere lösbar drehfest und/oder antreibbar verbunden oder verbindbar. Die Abtriebskupplung 194 ist mit einem dritten Abtriebsrad 192 drehfest verbunden. Das dritte Abtriebsrad 192 kämmt permanent mit dem zweiten Abtriebsrad 184, sodass das zweite Abtriebselement 190 mit dem ersten Abtriebselement 32 antreibbar ist.

Das Getriebe 20 kann ausserdem ein die Hauptgetriebeeinheit 22 aufnehmendes Hauptgetriebegehäuse 210 und/oder ein die Reversiereinheit 120 aufnehmendes Reversiereinheitsgehäuse 212 und/oder ein das Zwischengetriebe 150 aufnehmendes Zwischengetriebegehäuse 214 und/oder ein Hinterachsmodul 24 aufnehmendes Hinterachsgehäuse 216 umfassen. Das Hauptgetriebegehäuse 210 kann zumindest teilweise oder vollständig das Antriebselement 30 und den ersten, zweiten und dritten und vierten Planetenradsatz 70, 80, 90, 60 aufnehmen. Das Reversiereinheitsgehäuse 212 kann am, insbesondere unmittelbar am, Hauptgetriebegehäuse 210 angeordnet sein und/oder das Zwischengetriebegehäuse 214 kann am, insbesondere unmittelbar am, Reversiereinheitsgehäuse 212 angeordnet sein. Zwischen der Hauptgetriebeeinheit 22 kann über die Reversiereinheit 120 zur Zwischengetriebe 150 und dann zum Hinterachsmodul 24 ein Kraft- und/oder Drehmomentfluss herstellbar sein. Die Reversiereinheit 120 kann also der Hauptgetriebeeinheit 22 in Richtung des Kraft- und/oder Drehmomentfluss nachgeordnet sein. Ebenso kann das Zwischengetriebe 150 der Reversiereinheit 120 in Richtung des Kraft- und/oder Drehmomentfluss nachgeordnet sein. Ausserdem kann das Hinterachsmodul 24 dem Zwischengetriebe 150 in Richtung des Kraft- und/oder Drehmomentfluss nachgeordnet sein. Das Hauptgetriebegehäuse 210 kann auch zumindest teilweise oder vollständig das zweite Abtriebselement 190 aufnehmen. Das Hauptgetriebegehäuse 210 und/oder das Reversiereinheitsgehäuse 212 und/oder das Zwischengetriebegehäuse 214 können im Speziellen auch als ein Gehäuse, also einem Getriebegehäuse, mit einzelnen Abschnitten im Getriebegehäuse ausgebildet sein. Das Getriebe bzw. die Planetenradsätze der Hauptgetriebeeinheit und des Zwischengetriebes und der Reversiereinheit sind entlang einer Getriebelängsachse 280 ausgerichtet, insbesondere axial ausgerichtet.

Das Hinterachsmodul 24 kann ein Hinterachsdifferential 202 und/oder die hintere Antriebsachse 16 umfassen. Ausserdem kann das Hinterachsmodul 24 insbesondere das Hinterachsdifferential 202, ein Hinterachsritzel und ein Hinterachszahnrad umfassen. Das Hinterachsdifferential 202 kann ein Hinterachsritzel, beispielsweise ein Antriebskegelrad oder ein Kegelritzel, sowie ein Hinterachszahnrad, beispielsweise ein Kegel- oder Ringzahnrad, umfassen. Zusätzlich kann das Getriebe 20 ein Vorderachsmodul 220 (siehe Figur 1) mit einem Vorderachsdifferential (nicht dargestellt) und/oder der vorderen Antriebsachse 14 umfassen. Das Vorderachsgehäuse (nicht dargestellt) kann das Vorderachsmodul 220, insbesondere das Vorderachsdifferenzial (nicht dargestellt) und/oder zumindest teilweise die vordere Antriebsachse 14 aufnehmen. Das Vorderachsdifferential (nicht dargestellt) kann ein Vorderachsritzel (nicht dargestellt), beispielsweise ein Antriebskegelrad oder ein Kegelritzel, sowie ein Vorderachszahnrad, beispielsweise ein Kegel- oder Ringzahnrad, umfassen. Das zweite Abtriebselement 190 kann mit dem Vorderachsritzel verbunden sein oder das Vorderachsritzel und das zweite Abtriebselement 190 können als ein einteiliges Bauteil ausgebildet sein. Das Getriebe 20 kann auch das Zapfwellenmodul 26 umfassen und/oder das Hinterachsmodul 24 zwischen dem Zapfwellenmodul 26 und dem Zwischengetriebe 150 angeordnet sein. Ausserdem kann das Getriebe 20 eine Zapfwellen-Antriebswelle 230 umfassen. Die Zapfwellen-Antriebswelle 230 kann mit dem Antriebsmotor 20, insbesondere der Kurbelwelle, entweder direkt oder beispielsweise mit einem weiteren Koppelelement oder einer verzahnten oder geschraubten Verbindung oder mittels einer weiteren Antriebswelle (nicht dargestellt) verbunden sein. Dadurch kann die Zapfwellen-Antriebswelle 230 mit der Kurbelwelle antreibbar und eine Kraft und/oder ein Drehmoment von der Kurbelwelle auf die Zapfwellen-Antriebswelle 230 übertragbar sein. Die Zapfwellen-Antriebswelle 230 kann teilweise oder vollständig im Antriebselement 30 angeordnet sein. Die Zapfwellen-Antriebswelle 230 kann zumindest teilweise in der Hauptgetriebeeinheit 22, insbesondere dem Hauptgetriebegehäuse 210, und/oder der Reversiereinheit 120, insbesondere dem Reversiereinheitsgehäuse 212, und/oder der Zwischengetriebe 150, insbesondere dem Zwischengetriebegehäuse 214, und/oder dem Hinterachsmodul 24, insbesondere dem Hinterachsgehäuse 216, und/oder dem Zapfwellenmodul 26, insbesondere einem Zapfwellengehäuse angeordnet sein. Ebenso kann das Zapfwellenmodul 26 einen Zapfwellenstummel (nicht dargestellt) umfassen. Das Zapfwellengehäuse kann zumindest teilweise die Zapfwellen-Antriebswelle 230 und/oder zumindest teilweise den Zapfwellenstummel aufnehmen. Somit sind mindestens zwei, insbesondere genau zwei oder drei, Schaltelemente B1, B2, C1, C2, C3, C4, C5, C6 der Hauptgetriebeeinheit 22 und mindestens ein, insbesondere genau ein, Schaltelement C8, C9 des Zwischengetriebes 150 und mindestens ein, insbesondere genau ein, Schaltelement B3, C7 der Reversiereinheit 120 in Kombinationen von mindestens vier, insbesondere genau vier oder fünf, Schaltelementen B1, B2, B3, C1, C2, C3, C4, C5, C6, C7, C8, C9 betätigbar, bevorzugt selektiv betätigbar, besonders bevorzugt schliessbar und lösbar und/oder einrückbar und/oder schaltbar und/oder selektiv eingreifbar, um mindestens, insbesondere genau, achtundzwanzig Vorwärtsgänge, und insbesondere mindestens oder genau achtundzwanzig Rückwärtsgänge, zwischen dem Antriebselement 30 und dem ersten Abtriebselement 32 und/oder dem zweiten Abtriebselement 190 herzustellen. Es kann aber auch nur ein Teil der achtundzwanzig Rückwärtsgänge, also weniger als achtundzwanzig Rückwärtsgänge, tatsächlich verwendet werden.

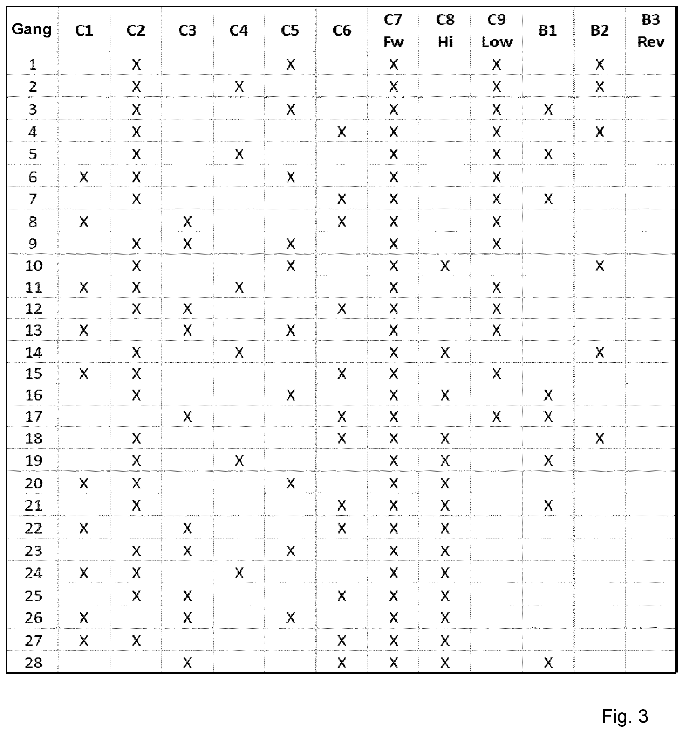

Figur 3 zeigt eine schematische Darstellung eines Schaltschemas des ersten Ausführungsbeispiels. Das Schaltschema zeigt nur die achtundzwanzig Vorwärtsgänge. Die achtundzwanzig Rückwärtsgänge ergeben sich, wenn die siebte Kupplung C7 betätigt wird, insbesondere gelöst wird, und die dritte Bremse B3 betätigt wird, insbesondere geschlossen wird. Gemäss dem Schaltschemas ergibt sich der erste Vorwärtsgang durch Betätigen, insbesondere das Schließen, der zweiten Bremse B2 und der zweiten und fünften und siebten und neunten Kupplung C2, C5, C7, C9. Der zweite Vorwärtsgang ergibt sich durch Betätigen, insbesondere das Schließen, der zweiten Bremse B2 und der zweiten und vierten und siebten und neunten Kupplung C2, C4, C7, C9. Der dritte Vorwärtsgang ergibt sich durch Betätigen, insbesondere das Schließen, der ersten Bremse B1 und der zweiten und fünften und siebten und neunten Kupplung C2, C5, C7, C9. Der vierte Vorwärtsgang ergibt sich durch Betätigen, insbesondere das Schließen, der zweiten Bremse B2 und der zweiten und sechsten und siebten und neunten Kupplung C2, C6, C7, C9. Der fünfte Vorwärtsgang ergibt sich durch Betätigen, insbesondere das Schließen, der ersten Bremse B1 und der zweiten und vierten und siebten und neunten Kupplung C2, C4, C7, C9. Der sechste Vorwärtsgang ergibt sich durch Betätigen, insbesondere das Schließen, der ersten und zweiten und fünften und siebten und neunten Kupplung C1, C2, C5, C7, C9. Der siebte Vorwärtsgang ergibt sich durch Betätigen, insbesondere das Schließen, der ersten Bremse und der zweiten und sechsten und siebten und neunten Kupplung C2, C6, C7, C9. Der achte Vorwärtsgang ergibt sich durch Betätigen, insbesondere das Schließen, der ersten und dritten und sechsten und siebten und neunten Kupplung C1, C3, C6, C7, C9. Der neunte Vorwärtsgang ergibt sich durch Betätigen, insbesondere das Schließen, der zweiten und dritten und fünften und siebten und neunten Kupplung C2, C3, C5, C7, C9. Der zehnte Vorwärtsgang ergibt sich durch Betätigen, insbesondere das Schließen, der zweiten Bremse und zweiten und fünften und siebten und achten Kupplung C2, C5, C7, C8. Der elfte Vorwärtsgang ergibt sich durch Betätigen, insbesondere das Schließen, der ersten und zweiten und vierten und siebten und neunten Kupplung C1, C2, C4, C7, C9. Der zwölfte Vorwärtsgang ergibt sich durch Betätigen, insbesondere das Schließen, der zweiten und dritten und sechsten und siebten und neunten Kupplung C2, C3, C6, C7, C9. Der dreizehnte Vorwärtsgang ergibt sich durch Betätigen, insbesondere das Schließen, ersten und dritten und fünften und siebten und neunten Kupplung C1, C3, C5, C7, C9. Der vierzehnte Vorwärtsgang ergibt sich durch Betätigen, insbesondere das Schließen, der zweiten Bremse B2 und der zweiten und vierten und siebten und achten Kupplung C2, C4, C7, C8. Der fünfzehnte Vorwärtsgang ergibt sich durch Betätigen, insbesondere das Schließen, der ersten und zweiten und sechsten und siebten und neunten Kupplung C1, C2, C6, C7, C9. Der sechszehnte Vorwärtsgang ergibt sich durch Betätigen, insbesondere das Schließen, der ersten Bremse B1 und der zweiten und fünften und siebten und achten Kupplung C2, C5, C7, C8. Der siebzehnte Vorwärtsgang ergibt sich durch Betätigen, insbesondere das Schließen, der ersten Bremse B1 und der dritten und sechsten und siebten und neunten Kupplung C3, C6, C7, C9. Der achtzehnte Vorwärtsgang ergibt sich durch Betätigen, insbesondere das Schließen, der zweiten Bremse B2 und der zweiten und sechsten und siebten und achten Kupplung C2, C6, C7, C8. Der neunzehnte Vorwärtsgang ergibt sich durch Betätigen, insbesondere das Schließen, der ersten Bremse B1 und der zweiten und vierten und siebten und achten Kupplung C2, C4, C7, C8. Der zwanzigste Vorwärtsgang ergibt sich durch Betätigen, insbesondere das Schließen, der ersten und zweiten und fünften und siebten und achten Kupplung C1, C2, C5, C7, C8. Der einundzwanzigste Vorwärtsgang ergibt sich durch Betätigen, insbesondere das Schließen, der ersten Bremse und der zweiten und sechste und siebten und achten Kupplung C2, C6, C7, C8. Der zweiundzwanzigste Vorwärtsgang ergibt sich durch Betätigen, insbesondere das Schließen, der ersten und dritten und sechsten und siebten und achten Kupplung C1, C1, C3, C6, C7, C8. Der dreiundzwanzigste Vorwärtsgang ergibt sich durch Betätigen, insbesondere das Schließen, der zweiten und dritten und fünften und siebten und achten Kupplung C2, C3, C5, C7, C8. Der vierundzwanzigste Vorwärtsgang ergibt sich durch Betätigen, insbesondere das Schließen, der ersten und zweiten und vierten und siebten und achten Kupplung C1, C2, C4, C7, C8. Der fünfundzwanzigste Vorwärtsgang ergibt sich durch Betätigen, insbesondere das Schließen, der zweiten und dritten und sechsten und siebten und achten Kupplung C2, C3, C6, C7, C8. Der sechsundzwanzigste Vorwärtsgang ergibt sich durch Betätigen, insbesondere das Schließen, der ersten und der dritten und fünften und siebten und achten Kupplung C1, C3, C5, C7, C8. Der siebenundzwanzigste Vorwärtsgang ergibt sich durch Betätigen, insbesondere das Schließen, ersten und zweiten und sechsten und siebten und achten Kupplung C1, C2, C6, C7, C8. Der achtundzwanzigste Vorwärtsgang ergibt sich durch Betätigen, insbesondere das Schließen, der ersten Bremse B1 und dritten und sechsten und siebten und achten Kupplung C3, C6, C7, C8.

Die im Folgenden genannten Vorteile gelten für alle gezeigten Figuren. Von Vorteil wird mit dem erfindungsgemässen Getriebe 20, insbesondere da eine minimale Anzahl an Zahnrädern, Kupplungen und Bremsen für das Getriebe 20 benötigt wird, eine einfache konstruktive Ausbildung des Getriebes 20 und des Nutzfahrzeugs 10 erreicht, insbesondere auch in Bezug auf eine Leichtbauweise des Getriebes 20 und des Nutzfahrzeugs 10. Aufgrund der hohen Packungsdichte der Getriebekomponenten des Getriebes 20 in axiale und laterale Richtung weist das Getriebe 20 vorteilhafterweise eine kompakte Bauweise mit minimalem Bauraum auf. Ebenso wird zusätzlicher Bauraum für Bauteile außerhalb des Getriebes 20 ermöglicht. Gleichzeitig kann eine optimale Anzahl an Gängen erreicht werden. Darüber hinaus können die Materialkosten für das Getriebe 20 aufgrund der optimierten Bauweise reduziert werden.

## Patentansprüche

1. Getriebe zum Übertragen eines von einem Antriebsmotor (18) erzeugten Drehmoments auf mindestens eine vordere und/oder hintere Antriebsachse (14, 16) eines landwirtschaftlichen oder industriellen Nutzfahrzeugs (10), mit einem Antriebselement (30) und einem ersten Abtriebselement (32) und mit einer Hauptgetriebeeinheit (22), wobei die Hauptgetriebeeinheit (22) einen ersten Planetenradsatz (70) mit einem ersten Sonnenrad (72), einem ersten Hohlrad (74), einem ersten Planetenträger (76) und einem ersten Planetensatz (78), und einen zweiten Planetenradsatz (80) mit einem zweiten Sonnenrad (82), und einen dritten Planetenradsatz (90) mit einem dritten Sonnenrad (92) und einem dritten Planentensatz (94), und einen vierten Planetenradsatz (60) mit einem vierten Sonnenrad (62), einem vierten Hohlrad (64), einem vierten Planetenträger (66) und einem vierten Planetensatz (68) umfasst, und die Hauptgetriebeeinheit (22) genau acht Schaltelemente (C1, C2, C3, C4, C5, C6, B1, B2) umfasst, wobei der zweite und dritte Planetenradsatz (80, 90) ein erstes gemeinsames Hohlrad (86) aufweisen, wobei das Getriebe ein Zwischengetriebe mit genau zwei Schaltelementen (C8, C9) und eine Reversiereinheit mit genau zwei Schaltelementen (B3, C7) umfasst, **dadurch gekennzeichnet, dass** die Schaltelemente der Hauptgetriebeeinheit (22) eine erste Bremse (B1) und eine zweite Bremse (B2) und eine erste Kupplung (C1) und eine zweite Kupplung (C2) und eine dritte Kupplung (C3) und eine vierte Kupplung (C4) und eine fünfte Kupplung (C5) und eine sechste Kupplung (C6) sind, wobei genau drei Schaltelemente (C1, C2, C3, C4, C5, C6, B1, B2) der Hauptgetriebeeinheit (22) und genau ein Schaltelement (C8, C9) des Zwischengetriebes (150) und genau ein Schaltelement (B3, C7) der Reversiereinheit (120) in Kombinationen von genau fünf Schaltelementen (C1, C2, C3, C4, C5, C6, C7, C8 ,C9, B1, B2, B3) betätigbar sind, um genau 28 (achtundzwanzig) Vorwärtsgänge zwischen dem Antriebselement (30) und dem ersten Abtriebselement (32) herzustellen, wobei der zweite und dritte Planetenradsatz (80, 90) einen ersten gemeinsamen Planetensatz (84) und einen ersten gemeinsamen Planetenträger (88) aufweisen, die Reversiereinheit (120) in Richtung des Kraft- und Drehmomentflusses nach der Hauptgetriebeeinheit (22) angeordnet ist, und die Hauptgetriebeeinheit (22) ein erstes Verbindungselement (96) umfasst, wobei das erste Verbindungselement (96) mit dem Antriebselement (30) und der vierten und fünften und sechsten Kupplung (C4, C5, C6) verbunden ist, und der vierte Planetenträger (66) mit der vierten Kupplung (C4) mit dem Antriebselement (30) und dem ersten Verbindungselement (96) lösbar verbindbar ist, und das Antriebselement (30) und das erste Verbindungselement (96) mit der fünften Kupplung (C5) mit dem vierten Hohlrad (64) lösbar verbindbar sind, und das Antriebselement (30) und das erste Verbindungselement (96) mit der sechsten Kupplung mit dem ersten Planetenträger lösbar verbindbar sind, und der vierte Planetenträger mit der ersten Kupplung (C1) mit dem zweiten Sonnenrad (82) und/oder der zweiten Kupplung (C2) mit dem dritten Sonnenrad (92) lösbar verbindbar ist.

2. Getriebe nach Anspruch 1, **dadurch gekennzeichnet, dass** das Zwischengetriebe (150) in Richtung des Kraft- und Drehmomentflusses nach der Hauptgetriebeeinheit (22) und vor der Reversiereinheit (120) angeordnet ist, oder die Reversiereinheit (120) in Richtung des Kraft- und Drehmomentflusses nach der Hauptgetriebeeinheit (22) und vor dem Zwischengetriebe (150) angeordnet ist.

3. Getriebe nach mindestens einem der Ansprüche 1 bis 2, **dadurch gekennzeichnet, dass** die Reversiereinheit (120) einen fünften Planetenradsatz (130) mit einem fünften Sonnenrad (132), einem fünften Hohlrad (134), einem fünften Planetenträger (136) und einem fünften Planetensatz (138) umfasst.

4. Getriebe nach mindestens einem der Ansprüche 1 bis 3, **dadurch gekennzeichnet, dass** das Zwischengetriebe (150) einen sechsten Planetenradsatz (160) mit einem sechsten Sonnenrad (162), einem sechsten Hohlrad (164), einem sechsten Planetenträger (166) und einem sechsten Planetensatz (168) aufweist.

5. Getriebe nach mindestens einem der Ansprüche 1 bis 4, **dadurch gekennzeichnet, dass** die Schaltelemente der Reversiereinheit (120) eine siebte Kupplung (C7) und eine dritte Bremse (B3) sind.

6. Getriebe nach mindestens einem der Ansprüche 1 bis 5, **dadurch gekennzeichnet, dass** die Schaltelemente des Zwischengetriebes (150) eine achte Kupplung (C8) und eine neunte Kupplung (C9) sind.

7. Getriebe nach mindestens einem der vorangehenden Ansprüche, **dadurch gekennzeichnet, dass** das Getriebe (20) ein Zapfwellenmodul (26) umfasst, und/oder ein Hinterachsmodul (24) zwischen dem Zapfwellenmodul (26) und der Hauptgetriebeeinheit (22) angeordnet ist, und/oder das Getriebe (20) eine Zapfwellen-Antriebswelle (230) umfasst.

8. Getriebe nach mindestens einem der vorangehenden Ansprüche, **dadurch gekennzeichnet, dass** das erste Abtriebselement (32) mit einem zweiten Zwischenelement (170) antreibbar verbunden oder verbindbar ist.

9. Landwirtschaftliches oder industrielles Nutzfahrzeug, insbesondere ein Traktor oder Schlepper, umfassend ein Getriebe (20) nach einem der Ansprüche 1 bis 8.

10. Landwirtschaftliches oder industrielles Nutzfahrzeug nach Anspruch 9, **dadurch gekennzeichnet, dass** das Getriebe (20) derart im Nutzfahrzeug (10) angeordnet ist, dass eine Getriebelängsachse (280) im Wesentlichen parallel oder koaxial zu einer Fahrzeuglängsachse (52) ist.

## Claims

1. Transmission for transmitting a torque generated by a drive motor (18) to at least one front and/or rear drive axle (14, 16) of an agricultural or industrial commercial vehicle (10), having a drive element (30) and a first output element (32) and having a main transmission unit (22), wherein the main transmission unit (22) comprises a first planetary gear set (70) with a first sun gear (72), a first ring gear (74), a first planet carrier (76) and a first planetary set (78), and a second planetary gear set (80) with a second sun gear (82), and a third planetary gear set (90) with a third sun gear (92) and a third planetary set (94), and a fourth planetary gear set (60) with a fourth sun gear (62), a fourth ring gear (64), a fourth planet carrier (66) and a fourth planetary set (68), and the main transmission unit (22) comprises exactly eight switching elements (C1, C2, C3, C4, C5, C6, B1, B2), wherein the second and the third planetary gear set (80, 90) have a first common ring gear (86), wherein the transmission comprises an intermediate transmission with exactly two switching elements (C8, C9) and a reversing unit with exactly two switching elements (B3, C7), **characterized in that** the switching elements of the main transmission unit (22) are a first brake (B1) and a second brake (B2) and a first clutch (C1) and a second clutch (C2) and a third clutch (C3) and a fourth clutch (C4) and a fifth clutch (C5) and a sixth clutch (C6), wherein exactly three switching elements (C1, C2, C3, C4, C5, C6, B1, B2) of the main transmission unit (22) and exactly one switching element (C8, C9) of the intermediate transmission (150) and exactly one switching element (B3, C7) of the reversing unit (120) are activable in combinations of exactly five switching elements (C1, C2, C3, C4, C5, C6, C7, C8, C9, B1, B2, B3) in order to establish exactly 28 (twenty-eight) forward gears between the drive element (30) and the first output element (32),
wherein the second and the third planetary gear set (80, 90) have a first common planetary set (84) and a first common planet carrier (88), the reversing unit (120) is disposed in the direction of the force and torque flux downstream of the main transmission unit (22), and the main transmission unit (22) comprises a first connecting element (96), wherein the first connecting element (96) is connected to the drive element (30) and the fourth and fifth and sixth clutches (C4, C5, C6), and the fourth planet carrier (66) is releasably connectable by way of the fourth clutch (C4) to the drive element (30) and the first connecting element (96), and the drive element (30) and the first connecting element (96) are releasably connectable by way of the fifth clutch (C5) to the fourth ring gear (64), and the drive element (30) and the first connecting element (96) are releasably connectable by way of the sixth clutch to the first planet carrier, and the fourth planet carrier is releasably connectable by way of the first clutch (C1) to the second sun gear (82) and/or by way of the second clutch (C2) to the third sun gear (92).

2. Transmission according to Claim 1, **characterized in that** the intermediate transmission (150) is disposed in the direction of the force and torque flux downstream of the main transmission unit (22) and upstream of the reversing unit (120), or the reversing unit (120) is disposed in the direction of the force and torque flux downstream of the main transmission unit (22) and upstream of the intermediate transmission (150).

3. Transmission according to at least one of Claims 1 to 2, **characterized in that** the reversing unit (120) comprises a fifth planetary gear set (130) with a fifth sun gear (132), a fifth ring gear (134), a fifth planet carrier (136) and a fifth planetary set (138).

4. Transmission according to at least one of Claims 1 to 3, **characterized in that** the intermediate transmission (150) comprises a sixth planetary gear set (160) with a sixth sun gear (162), a sixth ring gear (164), a sixth planet carrier (166) and a sixth planetary set (168).

5. Transmission according to at least one of Claims 1 to 4, **characterized in that** the switching elements of the reversing unit (120) are a seventh clutch (C7) and a third brake (B3).

6. Transmission according to at least one of Claims 1 to 5, **characterized in that** the switching elements of the intermediate transmission (150) are an eighth clutch (C8) and a ninth clutch (C9).

7. Transmission according to at least one of the preceding claims, **characterized in that** the transmission (20) comprises a power take-off module (26), and/or a rear axle module (24) is disposed between the power take-off module (26) and the main transmission unit (22), and/or the transmission (20) comprises a power take-off drive shaft (230).

8. Transmission according to at least one of the preceding claims, **characterized in that** the first output element (32) is connected, or able to be connected, in a drivable manner to a second intermediate element (170).

9. Agricultural or industrial commercial vehicle, in particular a tractor or hauler, comprising a transmission (20) according to one of Claims 1 to 8.

10. Agricultural or industrial commercial vehicle according to Claim 9, **characterized in that** the transmission (20) is disposed in the commercial vehicle (10) in such a manner that a transmission longitudinal axis (280) is substantially parallel to or coaxial with a vehicle longitudinal axis (52).

## Revendications

1. Transmission destinée à transmettre un couple de rotation généré par un moteur d'entraînement (18) sur au moins un essieu d'entraînement avant et/ou arrière (14, 16) d'un véhicule utilitaire agricole ou industriel (10), avec un élément d'entraînement (30) et un premier élément de sortie (32) et avec une unité de transmission principale (22), l'unité de transmission principale (22) comprenant un premier train de pignons satellites (70) avec une première roue solaire (72), une première couronne (74), un premier porte-pignons satellites (76) et un premier train planétaire (78), et un deuxième train de pignons satellites (80) avec une deuxième roue solaire (82), et un troisième train de pignons satellites (90) avec une troisième roue solaire (92) et un troisième train planétaire (94), et un quatrième train de pignons satellites (60) avec une quatrième roue solaire (62), une quatrième couronne (64), un premier porte-pignons satellites (66) et un quatrième train planétaire (68), et l'unité de transmission principale (22) comprenant exactement huit éléments de changement de vitesse (C1, C2, C3, C4, C5, C6, B1, B2), le deuxième et le troisième train de pignons satellites (80, 90) comportant une première couronne (86) commune, la transmission comprenant une transmission intermédiaire avec exactement deux éléments de changement de vitesse (C8, C9) et une unité d'inversion avec exactement deux éléments de changement de vitesse (B3, C7), **caractérisée en ce que** les éléments de changement de vitesse de l'unité de transmission principale (22) sont un premier frein (B1) et un deuxième frein (B2) et un premier embrayage (C1) et un deuxième embrayage (C2) et un troisième embrayage (C3) et un quatrième embrayage (C4) et un cinquième embrayage (C5) et un sixième embrayage (C6), exactement trois éléments de changement de vitesse (C1, C2, C3, C4, C5, C6, B1, B2) de l'unité de transmission principale (22) et exactement un élément de changement de vitesse (C8, C9) de la transmission intermédiaire (150) et exactement un élément de changement de vitesse (B3, C7) de l'unité d'inversion (120) pouvant être actionnés dans des combinaisons de cinq éléments de changement de vitesse (C1, C2, C3, C4, C5, C6, C7, C8, C9, B1, B2, B3) exactement pour établir exactement 28 (vingt-huit) rapports de marche avant entre l'élément d'entraînement (30) et le premier élément de sortie (32), le deuxième et le troisième train de pignons satellites (80, 90) comportant un premier train planétaire (84) commun et un premier porte-pignons satellites (88) commun, l'unité d'inversion (120) étant disposée après l'unité de transmission principale (22) en direction du flux de force et de couple de rotation, et l'unité de transmission principale (22) comprenant un premier élément de liaison (96), le premier élément de liaison (96) étant relié à l'élément d'entraînement (30) et au quatrième et cinquième et sixième embrayage (C4, C5, C6), et le quatrième porte-pignon satellites (66) pouvant être relié de manière amovible avec le quatrième embrayage (C4) à l'élément d'entraînement (30) et au premier élément de liaison (96), et l'élément d'entraînement (30) et le premier élément de liaison (96) pouvant être reliés de manière amovible avec le cinquième embrayage (C5) à la quatrième couronne (64), et l'élément d'entraînement (30) et le premier élément de liaison (96) pouvant être reliés de manière amovible avec le sixième embrayage au premier porte-pignons satellites, et le quatrième porte-pignons satellites pouvant être relié de manière amovible avec le premier embrayage (C1) à la deuxième roue solaire (82) et/ou avec le deuxième embrayage (C2) à la troisième roue solaire (92).

2. Transmission selon la revendication 1, **caractérisée en ce que** la transmission intermédiaire (150) est disposée après l'unité de transmission principale (22) et avant l'unité d'inversion (120) en direction du flux de force et de couple de rotation, ou l'unité d'inversion (120) est disposée après l'unité de transmission principale (22) et avant la transmission intermédiaire (150) en direction du flux de force et de couple de rotation.

3. Transmission selon au moins l'une des revendications 1 à 2, **caractérisée en ce que** l'unité d'inversion (120) comprend un cinquième train de pignons satellites (130) avec une cinquième roue solaire (132), une cinquième couronne (134), un cinquième porte-pignons satellites (136) et un cinquième train planétaire (138).

4. Transmission selon au moins l'une des revendications 1 à 3, **caractérisée en ce que** la transmission intermédiaire (150) comporte un sixième train de pignons satellites (160) avec une sixième roue solaire (162), une sixième couronne (164), un sixième porte-pignons satellites (166) et un sixième train planétaire (168).

5. Transmission selon au moins l'une des revendications 1 à 4, **caractérisée en ce que** les éléments de changement de vitesse de l'unité d'inversion (120) sont un septième embrayage (C7) et un troisième frein (B3).

6. Transmission selon au moins l'une des revendications 1 à 5, **caractérisée en ce que** les éléments de changement de vitesse de la transmission intermédiaire (150) sont un huitième embrayage (C8) et un neuvième embrayage (C9).

7. Transmission selon au moins l'une des revendications précédentes, **caractérisée en ce que** la transmission (20) comprend un module de prise de force (26) et/ou un module d'essieu arrière (24) est disposé entre le module de prise de force (26) et l'unité de transmission principale (22), et/ou la transmission (20) comprend un arbre d'entraînement de prise de force (230).

8. Transmission selon au moins l'une des revendications précédentes, **caractérisée en ce que** le premier élément de sortie (32) est relié ou peut être relié de manière à pouvoir être entraîné à un deuxième élément intermédiaire (170) .

9. Véhicule utilitaire agricole ou industriel, en particulier tracteur ou semi-remorque, comprenant une transmission (20) selon l'une des revendications 1 à 8.

10. Véhicule utilitaire agricole ou industriel selon la revendication 9, **caractérisé en ce que** la transmission (20) est disposée de telle manière dans le véhicule utilitaire (10) qu'un essieu longitudinal de transmission (280) est sensiblement parallèle ou coaxial à un essieu longitudinal de véhicule (52).
